# EUROPEAN PATENT APPLICATION

(11) **EP 4 826 770 A1**
(43) Date of publication of application: **21.10.2026**
(21) Application number: 26155131.1
(22) Date of filing: 29.01.2026
(51) Int. Cl.: H01M 4/131, H01M 4/485, H01M 4/62, H01M 4/66, H01M 10/42

(54) **ELECTRODE, SECONDARY BATTERY, AND BATTERY PACK**

(30) Priority: 16.04.2025 JP 2025067544
(71) Applicant: KABUSHIKI KAISHA TOSHIBA, Kawasaki-shi, Kanagawa (JP)
(72) Inventor: Hoshina, Keigo, Kawasaki-shi, Kanagawa (JP); Takahashi, Keitaro, Kawasaki-shi, Kanagawa (JP); Kano, Kento, Kawasaki-shi, Kanagawa (JP); Murata, Yoshiaki, Kawasaki-shi, Kanagawa (JP); Ueda, Kakuya, Kawasaki-shi, Kanagawa (JP); Yamashita, Yasunobu, Kawasaki-shi, Kanagawa (JP); Harada, Yasuhiro, Kawasaki-shi, Kanagawa (JP); Takami, Norio, Kawasaki-shi, Kanagawa (JP)
(74) Representative: Hoffmann Eitle

(57) **Abstract**

In general, according to an approach, an electrode (3) includes a current collector (3a) containing aluminum or an aluminum alloy, and an active material-containing layer(3b). The active material-containing layer (3b) contains particles (30) containing a niobium titanium-containing oxide. The electrode satisfies the following expression (1): $0.08 \leq I 1 / I 2 \leq 0.25$ the I1 is an intensity of a first peak having the highest intensity within a range where 2θ is 46° or more and 48° or less in a diffraction diagram obtained by X-ray diffraction on a surface of the active material-containing layer. the I2 is an intensity of a second peak having the highest intensity within a range where 2θ is 25° or more and 27° or less in the diffraction diagram. In a cross section of the active material-containing layer along a thickness direction thereof, an average aspect ratio of the particles is 2 or less.

## Description

### FIELD

This disclosure relates to an electrode, a secondary battery, and a battery pack.

### BACKGROUND

Recently, secondary batteries, such as a nonaqueous electrolyte secondary battery like a lithium ion secondary battery, have been actively researched and developed as a high energy-density battery. The secondary batteries, such as a nonaqueous electrolyte secondary battery, are anticipated as a power source for vehicles such as hybrid electric automobiles, electric cars, an uninterruptible power supply for base stations for portable telephones, or the like. Therefore, the secondary battery is demanded to, in addition to having a high energy density, be excellent in other performances such as rapid charge-discharge performances and long-term reliability, as well. For example, not only is the charging time remarkably shortened in a secondary battery capable of rapid charge and discharge, but the battery is also capable of improving motive performances in vehicles such as hybrid electric automobiles, and efficient recovery of regenerative energy of motive force.

In order to enable rapid charge/discharge, electrons and lithium ions must be able to migrate rapidly between the positive electrode and the negative electrode. However, when a battery using a carbon-based negative electrode is repeatedly subjected to rapid charge and discharge, precipitation of dendrite of metallic lithium on the electrode may sometimes occur, raising concern of heat generation or ignition due to internal short circuits.

In light of this, a battery using a metal composite oxide in a negative electrode in place of a carbonaceous material has been developed. In particular, in a battery using an oxide of titanium in the negative electrode, rapid charge and discharge can be stably performed. Such a battery also has a longer life than in the case of using a carbon-based negative electrode.

However, compared to carbonaceous materials, oxides of titanium have a higher potential relative to metallic lithium. That is, oxides of titanium are more noble. Furthermore, oxides of titanium have a lower capacity per weight. Therefore, a battery using an oxide of titanium for the negative electrode has a problem that the energy density is low.

For example, the electrode potential an oxide of titanium is about 1.5 V (vs. Li/Li⁺) relative to metallic lithium, which is higher (i.e., more noble) in comparison to potentials of carbon based negative electrodes. The potential of an oxide of titanium is attributed to the redox reaction between Ti³⁺ and Ti⁴⁺ upon electrochemical insertion and extraction of lithium, and is therefore electrochemically restricted. It is also a fact that rapid charge/discharge of lithium ions can be performed stably at a high electrode potential of about 1.5 V (vs. Li/Li⁺).

On the other hand, considering the capacity per unit weight, the theoretical capacity of titanium dioxide (anatase structure) is about 165 mAh/g, and the theoretical capacity of spinel type lithium-titanium composite oxides such as Li₄Ti₅O₁₂ is about 170 mAh/g. On the other hand, the theoretical capacity of a general graphite based electrode material is 385 mAh/g and greater. As such, the capacity density of an oxide of titanium is significantly lower than that of the carbon based negative electrode material. This is due to there being only a small number of lithium-insertion sites in the crystal structure, and lithium tending to be stabilized in the structure, and thus, substantial capacity being reduced.

In consideration of the above, a novel electrode material including Ti and Nb has been studied. It is expected that such a niobium titanium-containing oxide material has a high charge-and-discharge capacity. In particular, a composite oxide expressed by TiNb₂O₇ has a high theoretical capacity exceeding 380 mAh/g. Therefore, the niobium titanium-containing oxide is expected as a high-capacity material substituted for Li₄Ti₅O₁₂.

### BRIEF DESCRIPTION OF THE DRAWINGS

FIG. 1 is a schematic view illustrating a crystal structure of a niobium titanium-containing oxide Nb₂TiO₇.
FIG. 2 is a schematic view illustrating the crystal structure of FIG. 1, as viewed from another direction.
FIG. 3 is a cross-sectional schematic view illustrating an example of an electrode according to an approach.
FIG. 4 is an enlarged view of the particle illustrated in FIG. 3.
FIG. 5 is a diagram illustrating a part of a diffraction diagram illustrating results of X-ray diffraction measurement on an active material-containing layer surface of an electrode according to Example.
FIG. 6 is a diagram illustrating another part of the diffraction diagram illustrated in FIG. 5.
FIG. 7 is a cross-sectional view schematically illustrating an example of a secondary battery according to an approach.
FIG. 8 is an enlarged cross-sectional view of a part A of the secondary battery illustrated in FIG. 7.
FIG. 9 is a partially cut-out perspective view schematically illustrating another example of the secondary battery according to the approach.
FIG. 10 is an enlarged cross-sectional view of a part B of the secondary battery illustrated in FIG. 9.
FIG. 11 is a perspective view schematically illustrating an example of a battery module according to an approach.
FIG. 12 is an exploded perspective view schematically illustrating an example of a battery pack according to an approach.
FIG. 13 is a block diagram illustrating an example of an electric circuit of the battery pack illustrated in FIG. 12.
FIG. 14 is a schematic cross-sectional view illustrating an example of an electrode according to another example.
FIG. 15 is an enlarged view of the particle illustrated in FIG. 14.

### DETAILED DESCRIPTION

According to an approach, an electrode is provided. The electrode includes a current collector containing aluminum or an aluminum alloy, and an active material-containing layer held by the current collector. The active material-containing layer contains particles containing a niobium titanium-containing oxide. The electrode satisfies the following expression (1): $0.08 \leq I 1 / I 2 \leq 0.25$ the I1 is an intensity of a first peak having the highest intensity within a range where 2θ is 46° or more and 48° or less in a diffraction diagram obtained by X-ray diffraction on a surface not held by the current collector in the active material-containing layer. the I2 is an intensity of a second peak having the highest intensity within a range where 2θ is 25° or more and 27° or less in the diffraction diagram. In a cross section of the active material-containing layer along a thickness direction of the active material-containing layer, an average aspect ratio of the particles is 2 or less.

According to another approach, a secondary battery is provided. The secondary battery includes a positive electrode, a negative electrode which comprises the electrode according to the approach, and an electrolyte.

According to another approach, a battery pack is provided. The battery pack includes the secondary battery according to the approach.

Hereinafter, approaches will be described with reference to the drawings appropriately. Note that the same reference numerals are given to the same configurations throughout the approaches, and redundant description is omitted. In addition, each drawing is a schematic view for explaining the approaches and facilitating understanding thereof, and thus there are some parts in which a shape, a size, and a ratio are different from those in a device actually used, but they can be appropriately design-changed considering the following description and known technology.

### (First Approach)

According to a first approach, an electrode is provided. The electrode includes a current collector containing aluminum or an aluminum alloy, and an active material-containing layer held by the current collector. The active material-containing layer contains particles containing a niobium titanium-containing oxide. The electrode satisfies the following expression (1): $0.08 \leq I 1 / I 2 \leq 0.25$

I1 is an intensity of a first peak having the highest intensity within a range where 2θ is 46° or more and 48° or less in a diffraction diagram obtained by X-ray diffraction on a surface not held by the current collector in the active material-containing layer. I2 is an intensity of a second peak having the highest intensity within a range where 2θ is 25° or more and 27° or less in the diffraction diagram. In a cross section of the active material-containing layer along a thickness direction thereof, an average aspect ratio of the particles is 2 or less.

For example, aluminum can be stably present at a potential at which lithium ions are inserted into the niobium titanium-containing oxide. Therefore, the current collector containing aluminum or an alloy containing aluminum can be suitably used as a current collector in an electrode containing the niobium titanium-containing oxide.

The niobium titanium-containing oxide is an oxide containing a niobium element (Nb element) and a titanium element (Ti element). The niobium titanium-containing oxide may have, for example, a crystal structure called a Wadthley-Roth phase. In this oxide, octahedrons formed by metal ions containing a Nb element and a Ti element and oxygen ions constitute a block by sharing apices. In addition, in the crystal structure of the niobium titanium-containing oxide, edge-sharing structures or tetrahedral structures formed by metal ions containing a Nb element and a Ti element and oxygen ions are coupled to each other while being interposed between the above-described blocks, and are stacked in one axial direction.

The niobium titanium-containing oxide is preferably an oxide including a Nb₂TiO₇ phase in which Nb/Ti = 2 In the Nb₂TiO₇ phase, a crystal structure belongs to a space group C2/m of a monoclinic system. In this crystal structure, octahedrons formed by metal ions containing a Nb element and a Ti element and oxygen ions constitute a block in a form of three in vertical by three in horizontal by sharing apices. In addition, in this crystal structure, layers in which blocks are coupled to each other by edge-sharing overlap in a b-axis direction described later. Nb₂TiO₇ has a structure with a relatively wide gap among the niobium titanium-containing oxides, and therefore has a feature that a capacity with which lithium ions can be inserted is high.

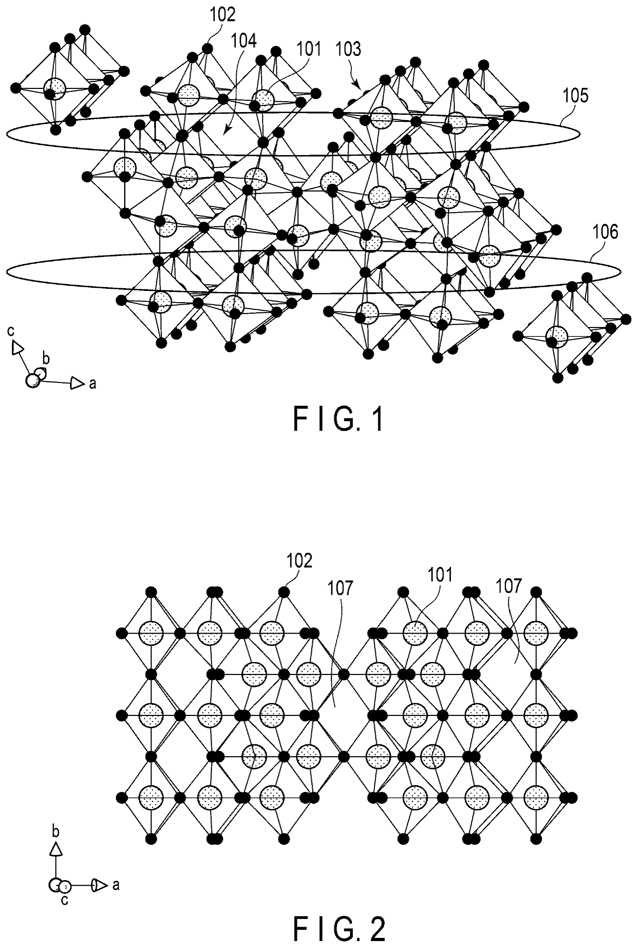

With reference to FIGS. 1 and 2, a crystal structure of Nb₂TiO₇ that is a monoclinic niobium titanium-containing oxide will be described as an example of the niobium titanium-containing oxide. FIG. 1 is a schematic view illustrating a crystal structure of the niobium titanium-containing oxide Nb₂TiO₇. FIG. 2 is a schematic view illustrating the crystal structure of FIG. 1, as viewed from another direction. In the description below, an a-axis direction and a b-axis direction are mutually orthogonal directions. A c-axis direction is a direction orthogonal to the a-axis direction and the b-axis direction.

As illustrated in FIG. 1, in the crystal structure of monoclinic Nb₂TiO₇, a metal ion 101 and an oxide ion 102 form a skeleton structure 103. At positions of the metal ion 101, Nb ions and Ti ions are randomly arranged at a ratio of Nb : Ti = 2 : 1. Such skeleton structures 103 are alternately arranged three-dimensionally, whereby vacancies 104 are present among the skeleton structures 103. These vacancies 104 serve as hosts for lithium ions. As illustrated in FIG. 1, these vacancies 104 can occupy a large part in the entire crystal structure. In addition, these vacancies 104 can stably keep the structure even if lithium ions are inserted thereinto. Into this crystal structure, 0 moles to a maximum of 5.0 moles of lithium ions can be inserted. Therefore, a composition in a case where 0 to 5.0 moles of lithium ions are inserted can be expressed as LiₓNb₂TiO₇ (0 ≤ x ≤ 5).

When a lithium ion is inserted into the vacancy 104 in the above crystal structure, the metal ion 101 forming the skeleton is reduced to a trivalent, thereby maintaining electric neutrality of the crystal. In the niobium titanium-containing oxide, not only a Ti ion is reduced from tetravalent to trivalent, but also a Nb ion is reduced from pentavalent to trivalent. Thus, the number of reduced valences per mass of active material of the niobium titanium-containing oxide is larger than that of a compound containing only Ti ions that are tetravalent cations. Therefore, even if many lithium ions are inserted, electrical neutrality of the crystal can be kept. Thus, the niobium titanium-containing oxide has a higher energy density than a compound containing only tetravalent cations, such as titanium oxide.

In addition, in FIG. 1, regions 105 and 106 are parts having two dimensional channels in the [100] and [020] directions, respectively. In addition, as illustrated in FIG. 2, the crystal structure of the monoclinic Nb₂TiO₇ has vacancies 107 in the [003] direction. The vacancies 107 function as conductive channels in the [003] direction, connecting the regions 105 and 106. By the presence of the conductive channels, lithium ions can move between the regions 105 and 106.

In this manner, in the crystal structure of the monoclinic Nb₂TiO₇, an equivalent insertion space of lithium ions is large, and the crystal structure is structurally stable. In addition, the monoclinic Nb₂TiO₇ can increase an energy density as compared with a compound not containing a pentavalent cation. Furthermore, in the crystal structure of the monoclinic Nb₂TiO₇, since the regions 105 and 106 having two-dimensional channels in which diffusion of lithium ions is fast, and the lithium channel 107 in the [003] direction, connecting these regions, are present, the monoclinic Nb₂TiO₇ can improve an insertion property of lithium ions into an insertion space and an extraction property of lithium ions from the insertion space, and can effectively increase a space that contributes to insertion and extraction of lithium ions. As a result, the monoclinic Nb₂TiO₇ can provide a high capacity. Specifically, a theoretical capacity of the monoclinic Nb₂TiO₇ is about 387 mAh/g, and this is double or more a value of a titanium oxide having a spinel structure.

In addition, even a niobium titanium-containing oxide having a different composition can have a structure similar to the crystal structure illustrated in FIGS. 1 and 2. Thus, the niobium titanium-containing oxide can provide a high capacity.

In addition, the niobium titanium-containing oxide has a lithium insertion potential of about 1.5 V (vs. Li/Li⁺). Therefore, by using such an oxide as an active material, a battery which can perform stable and repetitive quick charge-and-discharge can be provided.

From the above, the electrode containing the niobium titanium-containing oxide can have excellent charge-and-discharge cycle performance.

However, the Ti⁴⁺ ion and Nb⁵⁺ ion included in the niobium titanium-containing oxide do not have a 3d electron and a 4d electron, respectively. Therefore, the niobium titanium-containing oxide tends to have low electrical conductivity. Thus, in a case where an electrode containing the niobium titanium-containing oxide is produced, by mixing an electro-conductive agent excellent in conductivity with the niobium titanium-containing oxide as an electrode material, electrical conductivity in the electrode (active material-containing layer) can be ensured. In addition, when the electrode is produced, the active material-containing layer including the electrode materials is subjected to pressing such as rolling to enhance adhesion between the electrode materials, whereby electrical conductivity and an energy density can be improved.

However, the crystal structure of the niobium titanium-containing oxide is not isotropic, and crystal surfaces have different levels of surface energy, and thus there is a tendency that anisotropy occurs in particle shape. Specifically, in FIGS. 1 and 2, a primary particle is likely to grow in the a-axis direction corresponding to the [100] direction and in the b-axis direction corresponding to the [020] direction. Therefore, in a case where the niobium titanium-containing oxide is synthesized to generate particles containing the niobium titanium-containing oxide, a flat primary particle in which the a-axis direction and/or the b-axis direction is a longitudinal direction (major axis) and the c-axis direction corresponding to the [003] direction is a transverse direction (minor axis) is likely to be generated.

If an active material-containing layer including a large amount of flat primary particles is pressed, these particles in the longitudinal direction are likely to be oriented along an in-plane direction of the current collector. In other words, the plurality of flat primary particles are likely to be in a state where the flat primary particles in the transverse direction are arranged along a thickness direction of the current collector. As a pressing pressure on the active material-containing layer is higher, the particles in the longitudinal direction tend to be more easily oriented along the in-plane direction of the current collector.

When lithium ions are inserted into the niobium titanium-containing oxide, the particles containing the niobium titanium-containing oxide are more likely to expand along the a-axis direction and the b-axis direction than along the c-axis direction. That is, the niobium titanium-containing oxide is more likely to expand in the [100] direction and the [020] direction than in the [003] direction as lithium ions are inserted.

Therefore, in a case where lithium ions are inserted into an electrode having high orientation of particles containing the niobium titanium-containing oxide, the particles containing the niobium titanium-containing oxide are likely to expand in a direction along the in-plane direction of the current collector in the electrode. Therefore, the active material-containing layer is likely to expand along the in-plane direction of the current collector. The current collector containing aluminum or an aluminum alloy is soft, and is therefore easily elongated following the expansion of the active material-containing layer. Note that, in the present specification, the elongation of the electrode or the current collector refers to expansion of the electrode or the current collector along the in-plane direction.

Therefore, an electrode having high orientation of particles containing the niobium titanium-containing oxide is likely to expand in a direction along the in-plane direction of the current collector. As a result, the dimension of the electrode is changed, whereby distortion of the electrode is likely to occur. When the distortion of the electrode occurs, a resistance is likely to increase. In addition, charge-and-discharge cycle performance is likely to deteriorate. Furthermore, in a case where the electrode is used in combination with a counter electrode and a separator, a short circuit easily occurs due to a change in dimension of the electrode.

In consideration of the above-described circumstance, in the electrode according to the approach, an excessive increase of orientation of particles containing the niobium titanium-containing oxide in the active material-containing layer is suppressed. In other words, in the electrode according to the approach, the orientation of the particles containing the niobium titanium-containing oxide is in an appropriate state. Therefore, expansion of the electrode along the in-plane direction of the current collector can be suppressed. Therefore, the charge-and-discharge cycle performance can be improved.

Specifically, the electrode according to the approach satisfies the following expression (1): $0.08 \leq I 1 / I 2 \leq 0.25$

I1 is an intensity of a first peak having the highest intensity within a range where 2θ is 46° or more and 48° or less in a diffraction diagram obtained by X-ray diffraction on a surface not held by the current collector in the active material-containing layer. I2 is an intensity of a second peak having the highest intensity within a range where 2θ is 25° or more and 27° or less in the diffraction diagram. In a cross section of the active material-containing layer along a thickness direction thereof, an average aspect ratio of the particles is 2 or less. Since I1/I2 is within a range of 0.08 or more and 0.25 or less, it can be said that the orientation of the particles containing the niobium titanium-containing oxide contained in the active material-containing layer is in an appropriate state.

Note that a method for performing X-ray diffraction on a surface not held by the current collector in the active material-containing layer will be described later. In the present specification, the peak having the highest intensity within a predetermined range refers to a peak having the highest intensity at a peak top among peaks having peak tops within the predetermined range. The intensity of a peak refers to an intensity at a peak top of the peak. The peak means a portion having a region in which a differential value at a peak top of the peak is 0, and with the peak top as a boundary, a differential value for a diffraction angle (2θ, unit: °) less than the peak top is positive, and a differential value for a diffraction angle exceeding the peak top is negative.

The first peak is a peak having the highest intensity within a range where 2θ is 46° or more and 48° or less in a diffraction diagram obtained by X-ray diffraction on a surface not held by the current collector in the active material-containing layer. The first peak can be assigned to the 020 plane of the niobium titanium-containing oxide.

The second peak is a peak having the highest intensity within a range where 2θ is 25° or more and 27° or less in a diffraction diagram obtained by X-ray diffraction on a surface not held by the current collector in the active material-containing layer. The second peak can be assigned to the 003 plane of the niobium titanium-containing oxide. It can be said that the smaller a value of I1/I2, the higher the orientation of the particles containing the niobium titanium-containing oxide along the in-plane direction of the current collector. Specifically, it can be said that the 020 plane of the particles containing the niobium titanium-containing oxide tends to be oriented along the in-plane direction of the current collector. In a case where I1/I2 is less than 0.08, it can be determined that the orientation of the particles along the in-plane direction of the current collector is excessively high. In this case, the electrode is easily elongated along the in-plane direction of the current collector.

It can be said that the larger a value of I1/I2, the lower the orientation of the particles containing the niobium titanium-containing oxide along the in-plane direction of the current collector. Note that, in a case where the value of I1/I2 is excessively large, the 020 plane of the particles containing the niobium titanium-containing oxide can tend to be oriented along the thickness direction of the current collector. Therefore, in a case where I1/I2 is too high, that is, more than 0.25, if lithium ions are inserted into the niobium titanium-containing oxide, each of the particles is likely to expand along the thickness direction of the current collector. As a result, a volume change in the thickness direction of the active material-containing layer tends to be large. Therefore, the active material-containing layer is easily electrically released from the current collector, which is not preferable. A preferable value of I1/I2 is 0.09 to 0.23, and more preferably 0.09 to 0.19.

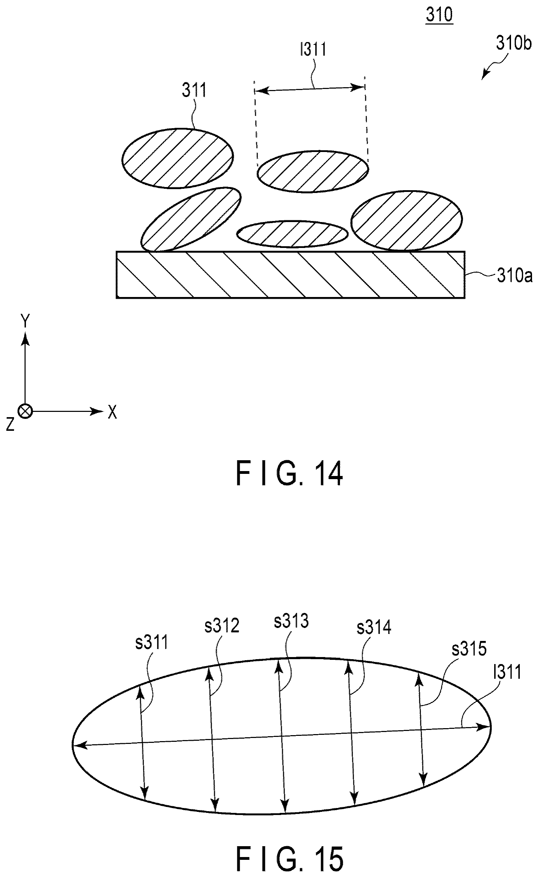

Here, an example of an electrode having an excessively small value of I1/I2 will be described with reference to FIG. 14. An excessively small value of I1/I2 means that the value of I1/I2 is less than 0.08.

FIG. 14 illustrates a schematic cross-sectional view of an electrode 310 according to Reference Example. The electrode 310 includes a current collector 310a and an active material-containing layer 310b formed on the current collector 310a. The active material-containing layer 310b includes a plurality of flat active material particles 311.

For the sake of convenience, FIG. 14 illustrates an enlarged view in which drawing of an electro-conductive agent and a binder that can be included in the active material-containing layer is omitted. Therefore, for example, the active material-containing layer 310b can further contain the active material particles 311 outside the region illustrated in FIG. 14.

The cross section illustrated in FIG. 14 is a cross section obtained in a case where the electrode 310 is cut along a thickness direction. The thickness direction of the electrode is a stacking direction of the current collector 310a and the active material-containing layer 310b. The Y axis is a direction along the thickness direction of the electrode. The X axis is a direction orthogonal to the Y axis and along the in-plane direction of the current collector. The Z axis is a direction orthogonal to the X axis and the Y axis and along the in-plane direction of the current collector.

Each of the active material particles 311 contained in the active material-containing layer 310b contains a niobium titanium-containing oxide. Each of the active material particles 311 tends to have a high aspect ratio. Therefore, it can be said that the active material particles 311 contained in the electrode 310 according to Reference Example have a high average aspect ratio described below.

The average aspect ratio is a value obtained by first measuring aspect ratios of 20 particles randomly selected among the particles in a cross section of the active material-containing layer along a thickness direction thereof, and averaging the aspect ratios. The aspect ratio is a ratio of the length of the major axis of the particle to the length of the minor axis of the particle.

The active material particles 311 contained in the electrode 310 according to Reference Example will be described with reference to FIG. 15. FIG. 15 is an enlarged view of one of the active material particles 311 in FIG. 14. A length l311 of the major axis of the particle is the length of the longest inner diameter (major axis) among the inner diameters of the particle to be measured. The length of the minor axis of the particle is calculated as follows. As illustrated in FIG. 15, five points for dividing the major axis of the particle into six equal parts are taken, and a line orthogonal to the major axis is drawn at each of the five points. Both ends of the line are points which intersect with a contour line of the particle. The lengths of the five lines (minor axes) are indicated by s311 to s315 in FIG. 15, respectively. An average value of the five lengths is obtained as the length of the minor axis.

The active material particles 311 included in the electrode 310 according to Reference Example illustrated in FIG. 14 include many particles having a high aspect ratio described above. That is, the average aspect ratio of the active material particles 311 is excessively high, that is, 2 or more. Therefore, in the electrode according to Reference Example, the active material particles 311 are likely to be oriented along the in-plane direction of the current collector 310a. Therefore, it can be said that the electrode 310 according to Reference Example is an electrode that is easily elongated along the in-plane direction.

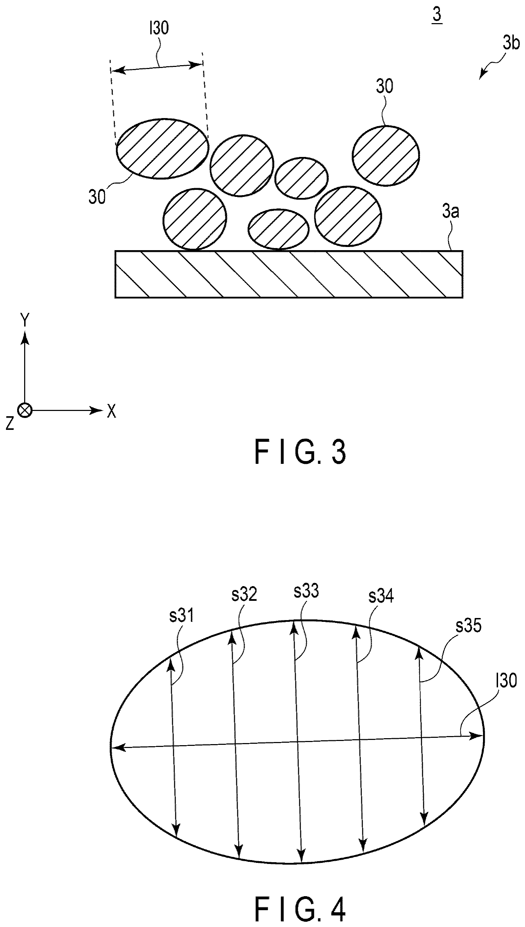

FIG. 3 schematically illustrates an example of the active material-containing layer included in the electrode according to the approach. The electrode includes the current collector 3a and the active material-containing layer 3b held by the current collector 3a and containing particles 30 containing a niobium titanium-containing oxide. As illustrated in FIG. 3, the active material-containing layer 3b can be stacked on the current collector 3a. In FIG. 3, for the sake of convenience, drawing of an electro-conductive agent and a binder which can be contained in the active material-containing layer is omitted, and an enlarged view is illustrated. Therefore, for example, the active material-containing layer 3b can further contain the particles 30 outside the region illustrated in FIG. 3.

The cross section illustrated in FIG. 3 is a cross section obtained in a case where the electrode is cut along a thickness direction. The thickness direction of the electrode is, for example, a stacking direction of the current collector 3a and the active material-containing layer 3b.

In FIG. 3, the Y axis is a direction along the thickness direction of the electrode. The X axis is a direction orthogonal to the Y axis and along the in-plane direction of the current collector. The Z axis is a direction orthogonal to the X axis and the Y axis and along the in-plane direction of the current collector.

As described further with reference to FIG. 4, each of the particles 30 illustrated in FIG. 3 tends to have a smaller aspect ratio than the active material particle 311 described with reference to FIGS. 14 and 15.

FIG. 4 is an enlarged view of one of the particles 30 in FIG. 3. The length of a major axis of the particle is indicated by l30, and the lengths of the five minor axes are indicated by s31 to s35, respectively. The length of the minor axis of the particle is an average value of the lengths of the minor axes s31 to s35. As described with reference to FIG. 15, a ratio of the length of the major axis to the length of the minor axis of the particle can be obtained as an aspect ratio. As illustrated in FIG. 4, the particle 30 has an aspect ratio smaller than that of the active material particle 311 illustrated in FIG. 15.

Therefore, the particles 30 tends to have a small average aspect ratio. More specifically, in the electrode illustrated in FIG. 3, the average aspect ratio of the particles is 2 or less. Therefore, it can be said that the particles 30 included in the electrode 3 according to the approach is less likely to be oriented along the in-plane direction of the current collector than the active material particles 311 described with reference to FIGS. 14 and 15. Therefore, it can be said that the electrode 3 according to the approach is an electrode in which elongation along the in-plane direction is suppressed.

In addition, since the particles 30 is unlikely to be oriented along the in-plane direction of the current collector, the value of I1/I2 does not become too small. Specifically, I1/I2 is likely to be 0.08 or more. Therefore, elongation of the electrode along the in-plane direction can be suppressed.

Note that since FIG. 3 is a schematic view, the shapes of the particles containing the niobium titanium-containing oxide, contained in the electrode according to the approach are not limited to those illustrated in FIG. 3. As long as the value of I1/I2 for the electrode is within a range of 0.08 or more and 0.25 or less and an average aspect ratio of the particles is 2 or less, the particles containing the niobium titanium-containing oxide may contain particles having other shapes. The shape of each of the particles containing the niobium titanium-containing oxide is not particularly limited, and may be a spherical shape, a flat shape, a needle shape, a plate shape, or the like. The active material-containing layer can contain particles containing the niobium titanium-containing oxide, having these shapes.

The average aspect ratio of the particles containing the niobium titanium-containing oxide can be, for example, 2.0 or less. The average aspect ratio may be, for example, 1.0 or more or 1.1 or more.

Hereinafter, another configuration of the electrode according to the approach will be described in detail.

The electrode according to the approach includes an active material-containing layer that is held by a current collector and contains particles containing a niobium titanium-containing oxide. The active material-containing layer can be formed on one surface or both surfaces of the current collector. Each of the particles containing the niobium titanium-containing oxide may be formed of the niobium titanium-containing oxide, or may be a particle containing the niobium titanium-containing oxide and a substance other than the niobium titanium-containing oxide.

The active material-containing layer is held by the current collector on one surface, for example. The other surface (surface not held by the current collector) of the active material-containing layer can be, for example, a surface in which at least a part is exposed to an electrode surface. In a case where the electrode according to the approach is used in combination with a separator and a counter electrode, the electrode, the separator, and the counter electrode can be stacked such that at least a part of the other surface faces the counter electrode with the separator interposed therebetween to be used.

The active material-containing layer can contain active material particles. The niobium titanium-containing oxide can function as an active material. The particles containing the niobium titanium-containing oxide can be active material particles. The active material-containing layer may contain an active material (second active material) other than the niobium titanium-containing oxide as an active material. The active material particles may be formed of particles containing the niobium titanium-containing oxide, or may be a mixture of particles containing the niobium titanium-containing oxide and particles containing the second active material.

The active material-containing layer can further contain an electro-conductive agent and a binder. The electrode according to the approach may be a negative electrode or a positive electrode. The electrode according to the approach may be, for example, an electrode for a battery or an electrode for a secondary battery.

The electrode according to the approach is preferably a negative electrode for a secondary battery. In a case where the electrode according to the approach is included in a secondary battery as a negative electrode, for example, when the secondary battery is charged, lithium ions can be inserted into the niobium titanium-containing oxide. Therefore, the negative electrode for a secondary battery, containing the niobium titanium-containing oxide is likely to expand with charging. Since the electrode according to the approach can suppress elongation of the electrode caused by expansion of the particles containing the niobium titanium-containing oxide, even when the electrode is incorporated in a secondary battery, elongation of the electrode caused by charge and discharge of the secondary battery can be suppressed. Note that the secondary battery can be, for example, a lithium ion secondary battery.

The niobium titanium-containing oxide has, for example, a monoclinic crystal structure. The monoclinic niobium titanium-containing oxide is, for example, at least one selected from the group consisting of an oxide represented by the general formula LiₓTi_{1-y}M1_{y}Nb_{2-z}M2_{z}O_{7+δ} and an oxide represented by the general formula LiₓTi_{1-y}M3_{y+z}Nb_{2-z}O_{7-δ}. Here, M1 is at least one selected from the group consisting of Zr, Si, and Sn. M2 is at least one selected from the group consisting of V, Ta, and Bi. M3 is at least one selected from the group consisting of Mg, Fe, Ni, Co, W, Ta, and Mo. The subscripts in the composition formulas satisfy 0 ≤ x ≤ 5, 0 ≤ y<1, 0 ≤ z<2, and -0.3 ≤ δ ≤ 0.3.

Specific examples of the monoclinic niobium titanium-containing oxide include Nb₂TiO₇, Nb₂Ti₂O₉, Nb₁₀Ti₂O₂₉, Nb₁₄TiO₃₇, and Nb₂₄TiO₆₂. A ratio of Ti/Nb in the monoclinic niobium titanium-containing oxide is determined according to design and application of a battery, but the ratio of Ti/Nb is preferably 1.5 ≤ Nb/Ti < 5 from a viewpoint of not sacrificing an active material capacity. The monoclinic niobium titanium-containing oxide may be a replaced niobium titanium-containing oxide in which at least a part of Nb and/or Ti is replaced with a different element. Examples of the replacement element include Na, K, Ca, Co, Ni, Si, P, V, Cr, Mo, Ta, Zr, Mn, Fe, Mg, B, Pb, and Al. The replaced niobium titanium-containing oxide may contain one type of replacement element or two or more types of replacement elements.

Examples of the active material (second active material) other than the niobium titanium-containing oxide include a lithium titanate having a ramsdellite structure (for example, Li_{2+y}Ti₃O₇, 0 ≤ y ≤ 3), a lithium titanate having a spinel structure (for example, Li₄₊ₓTi₅O₁₂, 0 ≤ x ≤ 3), monoclinic titanium dioxide (TiO₂(B)), anatase titanium dioxide, rutile titanium dioxide, a hollandite titanium-containing oxide, and an orthorhombic titanium-containing oxide.

Examples of the orthorhombic titanium-containing oxide include a compound represented by Li₂₊ₐM(I)_{2-b}Ti_{6-c}M(II)_{d}O_{14+σ}. Here, M(I) is at least one selected from the group consisting of Sr, Ba, Ca, Mg, Na, Cs, Rb, and K. M(II) is at least one selected from the group consisting of Zr, Sn, V, Nb, Ta, Mo, W, Y, Fe, Co, Cr, Mn, Ni, and Al. The subscripts in the composition formula satisfy 0 ≤ a ≤ 6, 0 ≤ b < 2, 0 ≤ c < 6, 0 ≤ d < 6, and -0.5 ≤ σ ≤ 0.5. Specific examples of the orthorhombic titanium-containing oxide include Li₂₊ₐNa₂Ti₆O₁₄ (0 ≤ a ≤ 6).

A ratio of the particles containing the niobium titanium-containing oxide in the active material particles contained in the active material-containing layer is, for example, 50% by mass or more, and preferably 80% by mass or more. This ratio may be 100% by mass. A ratio of the niobium titanium-containing oxide in the active material is, for example, 50% by mass or more, and preferably 80% by mass or more. This ratio may be 100% by mass.

The particles containing the niobium titanium-containing oxide can contain at least one of primary particles and secondary particles formed by aggregation of the primary particles. For example, the primary particles may be combined with carbon in a state where at least a part of a surface thereof is coated with a carbon-containing layer. The secondary particles may be formed by aggregation of primary particles combined with carbon. Alternatively, the secondary particles may be secondary particles formed by aggregation of primary particles, and may be combined with carbon in a state where at least a part of a surface of the secondary particles is coated with a carbon-containing layer.

As an average particle size of the particles containing the niobium titanium-containing oxide is smaller, an effect of suppressing elongation of the electrode caused by expansion of the niobium titanium-containing oxide tends to be easily obtained. The average particle size is, for example, preferably 5 µm or less, and more preferably 3 µm or less. The average particle size may be, for example, 5.0 µm or less, or 3.0 µm or less.

The larger the average particle size, the easier the handling of the particles and the more easily a side reaction tends to be suppressed. The average particle size of the particles containing the niobium titanium-containing oxide can be, for example, 0.1 µm or more. The average particle size of the particles containing the niobium titanium-containing oxide is preferably 0.1 µm or more and 3 µm or less.

Although a method for measuring the average particle size will be described later, the average particle size of the particles containing the niobium titanium-containing oxide can be an average primary particle size.

In a case where the particles containing the niobium titanium-containing oxide includes secondary particles formed by aggregation of a plurality of primary particles containing the niobium titanium-containing oxide, an average secondary particle size may be, for example, within a range of 1 µm or more and 100 µm or less, or within a range of 5 µm or more and 30 µm or less.

An electro-conductive agent can be blended in order to enhance current collection performance and to suppress contact resistance between the active material and the current collector. Examples of the electro-conductive agent include carbon materials such as vapor grown carbon fiber (VGCF), carbon black such as acetylene black, graphene, graphite, carbon nanofibers, and carbon nanotubes. One type or two or more types of electro-conductive agents may be used. Alternatively, instead of using the electro-conductive agent, carbon coating or electron conductive inorganic material coating may be applied to a surface of the active material particles.

The active material-containing layer preferably contains a carbon material as the electro-conductive agent. By inclusion of a carbon material in addition to the niobium titanium-containing oxide in the active material-containing layer, electrical conductivity of the electrode can be improved. Examples of the carbon material include a fibrous carbon material and a granular carbon material.

The active material-containing layer preferably contains a fibrous carbon material as the electro-conductive agent, and more preferably contains both a fibrous carbon material and a granular carbon material.

The fibrous carbon material can effectively improve electrical conductivity in a small amount. Therefore, in a case where the electro-conductive agent contains the fibrous carbon material, the amount of the electro-conductive agent contained in the active material-containing layer can be reduced. Therefore, it contributes to increasing a ratio of the active material in the active material-containing layer. As a result, an electrode capacity can be improved.

Note that, if a ratio of the niobium titanium-containing oxide in the active material-containing layer is increased, the electrode is easily affected by expansion of the particles containing the niobium titanium-containing oxide. That is, the electrode is easily elongated due to expansion of the niobium titanium-containing oxide. According to the electrode according to the approach, since elongation of the electrode caused by expansion of the niobium titanium-containing oxide can be suppressed, a ratio of the niobium titanium-containing oxide contained in the active material-containing layer can be increased.

The content of the fibrous carbon material is preferably less than 2% by mass with respect to the active material-containing layer. The content of the fibrous carbon material may be, for example, 1.00% by mass or less or 0.24% by mass or less. The content of the fibrous carbon material can be, for example, 0.05% by mass or more.

Examples of the fibrous carbon material include vapor grown carbon fiber (VGCF), carbon nanofibers, and carbon nanotubes.

As the amount of the granular carbon material contained in the active material-containing layer increases, electron conductivity tends to be improved. However, if the content of the granular carbon material is large, a pressing pressure required at the time of pressing to a desired density in an electrode manufacturing process tends to be high. Therefore, the content of the granular carbon material is preferably less than 2% by mass with respect to the active material-containing layer. The content of the granular carbon material may be, for example, 1.15% by mass or less or 0.77% by mass or less. The content of the granular carbon material can be 0.39% by mass or more.

Examples of the granular carbon material include carbon black such as acetylene black.

A binder is blended in order to fill gaps of the dispersed active material and to bind the active material and a negative electrode current collector to each other. Examples of the binder include polytetrafluoro ethylene (PTFE), polyvinylidene fluoride (PVdF), a fluororubber, a styrene-butadiene rubber (SBR), a polyacrylic acid compound, an imide compound, carboxymethyl cellulose (CMC), and salts of CMC. One of these may be used as the binder, or two or more of these may be used in combination as the binder.

Blending ratios of the active material particles, the electro-conductive agent, and the binder in the active material-containing layer can be appropriately changed according to an application of the electrode. In the active material-containing layer, the active material particles, the electro-conductive agent, and the binder are preferably contained at ratios of 92% by mass or more and 98% by mass or less, 0.4% by mass or more and 2% by mass or less, and 2% by mass or more and 6% by mass or less, respectively.

The content of the active material particles in the active material-containing layer is preferably 90% by mass or more, and more preferably 95% by mass or more from a viewpoint of improving an electrode capacity.

By reducing the amount of the electro-conductive agent, the capacity of the electrode can be increased. In addition, as the amount of the electro-conductive agent is reduced, a porosity of the active material-containing layer described later tends to be increased. For example, the porosity can be increased to 20% or more and 40% or less. A lower limit of the content of the electro-conductive agent in the active material-containing layer can be, for example, 0.40% by mass. The content of the electro-conductive agent may be, for example, less than 2% by mass, 1% by mass or less, or 1.00% by mass or less. The content of the electro-conductive agent can be, for example, 0.43% by mass or more and 1.20% by mass or less.

By reducing the amount of the binder, the capacity of the electrode can be increased. In addition, as the amount of the binder is reduced, the porosity of the active material-containing layer tends to be increased. A lower limit of the content of the binder in the active material-containing layer can be, for example, 2% by mass. The content of the binder is, for example, preferably 4% by mass or less, and more preferably 3% by mass or less.

An electrode density (not including the current collector) is, for example, within a range of 1.8 g/cm³ or more and 3.3 g/cm³ or less, and preferably within a range of 2.2 g/cm³ or more and 3.0 g/cm³ or less. The electrode density is the density of the active material-containing layer.

The porosity of the active material-containing layer measured by a mercury intrusion method is preferably 20% or more and 40% or less. In a case where the porosity is high, for example, if the electrode according to the approach is used in combination with an electrolyte, the active material-containing layer easily holds the electrolyte, and therefore input/output performance of the electrode can be improved. The porosity of the active material-containing layer is preferably 40% or less from a viewpoint of ensuring the strength of the electrode.

The current collector included in the electrode according to the approach contains aluminum or an aluminum alloy. The aluminum alloy can be, for example, an alloy of aluminum and one or more elements selected from Mg, Ti, Zn, Mn, Fe, Cu, and Si. In a case where the current collector contains a material other than aluminum, a ratio of aluminum atoms in the composition of the materials constituting the current collector is preferably 99% by mass or more. The ratio of aluminum atoms in the composition of the materials constituting the current collector may be 100% by mass.

The current collector can have, for example, a plate shape, a foil shape, or a mesh shape.

The current collector is preferably thin from a viewpoint of reducing the weight of the electrode. However, since the current collector tends to be softer as the current collector is thinner, the current collector is easily elongated following expansion of the active material-containing layer. As a result, the entire electrode is easily elongated. In the electrode according to the approach, since I1/I2 is 0.08 or more and an average aspect ratio of the particles is 2 or less, elongation of the active material-containing layer in a direction along the in-plane direction of the current collector is suppressed. Therefore, even if the current collector is thinned, the elongation of the electrode can be suppressed.

The thickness of the current collector is preferably, for example, 20 µm or less. The thickness of the current collector can be, for example, 7 µm or more from a viewpoint of ensuring the strength of the current collector.

In addition, the current collector can include a portion where the active material-containing layer is not formed on a surface thereof. This portion can act as a current collecting tab.

### <Method for Manufacturing Electrode>

The electrode according to the approach can be produced, for example, by producing particles containing a niobium titanium-containing oxide, and then optionally mixing an electro-conductive agent and a binder therewith to form an active material-containing layer. The active material-containing layer is held by a current collector containing aluminum or an aluminum alloy.

First, an example of a method for producing the particles containing a niobium titanium-containing oxide will be described.

The niobium titanium-containing oxide can be synthesized using, for example, titanium dioxide (TiO₂) and niobium pentoxide (Nb₂O₅) as starting materials. TiO₂ and Nb₂O₅ are mixed such that a molar ratio between Ti and Nb is a molar ratio in a desired composition of the niobium titanium-containing oxide, and subjected to a pulverization treatment. The pulverization treatment can be performed by, for example, dry pulverization or wet pulverization. The particle sizes of the starting materials can be reduced by the pulverization treatment.

After the pulverization treatment, the starting materials are fired. Firing conditions can be appropriately changed according to the intended composition of the niobium titanium-containing oxide, the particle sizes of the starting materials, and the like, and for example, firing can be performed at a temperature of 1100°C or higher and 1150°C or lower for five hours or more and 20 hours or less. If the firing temperature is too high, an average aspect ratio of the obtained particles tends to be as high as more than 2, which is not preferable.

The particles (coarse particles) obtained by firing are subjected to a pulverization treatment. The pulverization treatment of the coarse particles can be performed by, for example, dry pulverization or wet pulverization.

The coarse particles are subjected to the pulverization treatment and then to a heat treatment. The heat treatment can be performed, for example, at a temperature of 400°C or higher and 600°C or lower for one hour or more and five hours or less.

In the firing, the niobium titanium-containing oxide is likely to cause grain growth in a certain direction. Specifically, a crystal of the niobium titanium-containing oxide easily grows along the 020 plane direction. As a result, an average aspect ratio of the coarse particles tends to be as high as more than 2. By subjecting the coarse particles to the pulverization treatment and then to the heat treatment, particles having an average aspect ratio as low as 2 or less are easily obtained.

Particles containing a niobium titanium-containing oxide can be produced by the method described above. In addition, for example, particles containing a niobium titanium-containing oxide may be produced by a method described below.

Titanium oxysulfate and niobium pentachloride are prepared as starting materials. These starting materials are mixed such that a molar ratio between Ti and Nb is a molar ratio in a desired composition of the niobium titanium-containing oxide, put into a mixed solution of sulfuric acid and ethanol, and subjected to a heat treatment. For the heat treatment at this time, for example, an autoclave can be used. The heat treatment using the autoclave can be performed at about 150°C for about five hours. Thereafter, the powder after the treatment is subjected to a heat treatment to synthesize a niobium titanium-containing oxide. Conditions for the heat treatment can be appropriately changed according to the intended composition of the niobium titanium-containing oxide, the particle sizes of the starting materials, and the like, and for example, the heat treatment can be performed at a temperature of 900°C or higher and 1050°C or lower for 0.5 hours or more and five hours or less.

According to the above method, grain growth in the synthesis of the niobium titanium-containing oxide can be suppressed. Specifically, growth of a crystal of the niobium titanium-containing oxide along the 020 plane direction can be suppressed. Therefore, particles having an average aspect ratio as low as 2 or less are easily obtained.

According to any of the methods described above, particles containing a niobium titanium-containing oxide, having an average aspect ratio of 2 or less are easily obtained. By producing an electrode using such particles, an electrode in which an average aspect ratio of particles is 2 or less in a cross section of the active material-containing layer along a thickness direction thereof is easily obtained, which is preferable.

Next, an active material-containing layer is produced using an active material containing the particles containing a niobium titanium-containing oxide. The active material-containing layer can be produced, for example, as follows. First, an active material, an electro-conductive agent, and a binder are suspended in a solvent to prepare a slurry. This slurry is applied to one surface or both surfaces of a current collector. Next, the applied slurry is dried to obtain a stack of the active material-containing layer and the current collector. Thereafter, this stack is subjected to pressing such as roll pressing. In this way, an electrode in which the active material-containing layer is held by the current collector is produced.

Alternatively, an electrode may be produced by the following method. First, an active material, an electro-conductive agent, and a binder are mixed to obtain a mixture. Next, the mixture is formed into pellets. Thereafter, by disposing these pellets on a current collector, an electrode in which the active material-containing layer is held by the current collector can be obtained. This electrode may be further subjected to pressing.

By adjusting an average aspect ratio of the particles containing the niobium titanium-containing oxide, the type and content of the electro-conductive agent, and pressing conditions such as a pressing pressure, a value of I1/I2 and a porosity in the obtained electrode can be changed.

In order to set I1/I2 in the obtained electrode within a range of 0.08 or more and 0.25 or less, it is preferable to lower the pressing pressure. In addition, as the pressing pressure is lowered, the porosity of the active material-containing layer tends to be increased.

The pressing is preferably performed by hot pressing. By heating and pressurizing the stack by hot pressing, the stack can be pressed while softening the binder. Therefore, for example, a pressing pressure required at the time of pressing to a desired density can be lowered. As a result, I1/I2 in the obtained electrode can be easily adjusted within a range of 0.08 or more and 0.25 or less. In addition, the porosity of the active material-containing layer can be easily adjusted within a range of 20% or more and 40% or less.

### (Measurement method)

### (X-Ray Diffraction Measurement of Electrode)

X-ray diffraction measurement of a surface not held by the current collector in the active material-containing layer is performed as follows.

In a case where an electrode to be measured is incorporated in a battery, the battery is first brought into a fully discharged state. For example, discharging the battery at a current of 0.1 C in an environment of 25°C until a rated end voltage or a battery voltage reaches 1.0 V is repeated a plurality of times such that a current value at the time of discharge is 1/100 or less of a rated capacity, whereby the battery can be brought into a fully discharged state. Note that, even in a completely discharged state, residual lithium ions may be present.

The battery including the electrode in a fully discharged state (state of charge: 0%) is disassembled in a glove box filled with argon. The electrode to be measured is taken out from the disassembled battery. This electrode is washed with an appropriate solvent and then dried. As the solvent used for washing, for example, ethyl methyl carbonate is used.

The electrode is cut into a predetermined size and then fixed onto a glass plate. The glass plate to which the electrode sample is fixed is attached to an X-ray diffractometer, and is irradiated with an X-ray from a Cu-Kα radiation source to obtain a diffraction pattern. As the X-ray diffractometer, for example, SmartLab manufactured by Rigaku or a device having a function equivalent thereto can be used. As measurement conditions, scanning was performed at 2θ within a range of 10° to 90° using a Cu-Kα ray as a radiation source, and a scan speed was 0.2°/sec.

The composition and density of the electrode and the thickness of the active material-containing layer may vary depending on an electrode to be measured, and if an X-ray irradiation position in a thickness direction of the electrode varies, a diffraction angle shifts. In order to avoid this, the thickness of the electrode is measured in advance with a film thickness meter, and a sample position is adjusted such that an outermost surface of the electrode (active material-containing layer) is irradiated with an X-ray. In this way, even if the plurality of electrode samples have different film thicknesses, an error in a peak position can be eliminated.

The X-ray diffraction described above is performed on a surface not held by the current collector in the active material-containing layer. Note that, in the present specification, the surface not held by the current collector can be a surface excluding a surface (side surface) along a thickness direction of the active material-containing layer in addition to a surface held by the current collector among surfaces included in the active material-containing layer.

From an obtained diffraction diagram, the intensity I1 of the first peak having the highest intensity within a range where 2θ is 46° or more and 48° or less, the intensity I2 of the second peak having the highest intensity within a range where 2θ is 25° or more and 27° or less, and I1/I2 can be calculated.

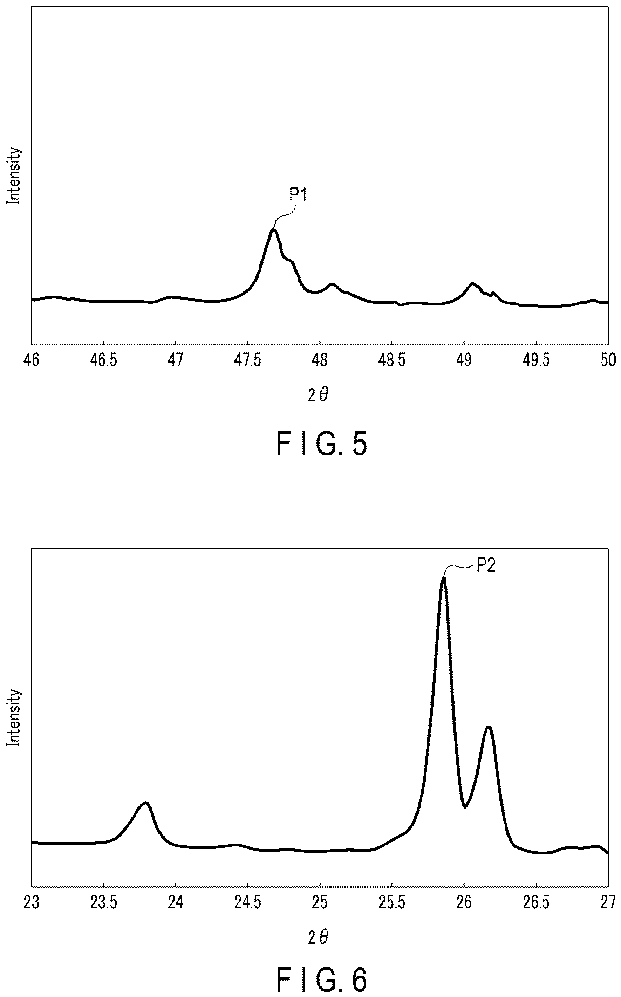

An example of the diffraction diagram obtained by the above method is illustrated in FIGS. 5 and 6. Each of FIGS. 5 and 6 is a diffraction diagram obtained by X-ray diffraction on a surface not held by the current collector in the active material-containing layer, of an electrode of Example 1 described later. In the diffraction diagram, the horizontal axis represents a diffraction angle (2θ, unit: °), and the vertical axis represents an intensity. Note that the intensity obtained by X-ray diffraction is a relative intensity expressed in an arbitrary unit (a. u.). FIG. 5 illustrates a range where the diffraction angle (2θ) is 46° or more and 50° or less, and FIG. 6 illustrates a range where the diffraction angle is 23° or more and 27° or less.

As illustrated in FIGS. 5 and 6, the X-ray diffraction diagram of the electrode of Example 1 has a peak within a range where 2θ is 46° or more and 48° or less and has a peak within a range where 2θ is 25° or more and 27° or less.

FIG. 5 illustrates a peak top P1 of a first peak having the highest intensity within a range where 2θ is 46° or more and 48° or less. An intensity at P1, that is, a value of I1, is 73200. FIG. 6 illustrates a peak top P2 of a second peak having the highest intensity within a range where 2θ is 25° or more and 27° or less. An intensity at P2, that is, a value of I2, is 6670. From these, it can be specified that I1/I2 of the electrode of Example 1 is 0.09. (SEM observation of electrode cross section)

Observation of an electrode cross section with scanning electron microscopy (SEM) is performed as follows. First, the electrode taken out from the battery as described above is cut in a direction parallel to a transverse direction of the electrode using an Ar ion milling apparatus, and a cross section of the active material-containing layer is exposed. At this time, the electrode is cut along the transverse direction at a position where the length of the electrode in a longitudinal direction is halved. The electrode is attached to an SEM sample table such that the exposed cross section of the active material-containing layer can be observed.

In order to increase a contrast between the active material and other materials, photography is performed by a backscattered electron image in which information of the composition of materials is reflected. An observation magnification is set to 5000 times. With this magnification, the shapes of particles can be discriminated, and many particles can be photographed at a time, which is preferable. In addition, at the time of photography, in order to make it possible to understand the thickness direction and in-plane direction of the electrode, photography is performed such that the current collector is situated in the horizontal direction (in-plane direction of the electrode), or the active material-containing layer and the current collector are included in the same view field. The horizontal direction of the current collector in the SEM image is a direction in which a surface of the current collector extends, and is an in-plane direction of the electrode.

Next, in order to obtain data of shapes of particles, image analysis software is used. As the image analysis software, for example, ImageJ described in Non-Patent Literature 1(Dr. Michael et al., Image Processing with ImageJ, Reprinted from the July 2004 issue of Biophotonics International copyrighted by Laurin Publishing Co. INC.) can be used. The photographed SEM image is binarized by an algorithm (Non-Patent Literature 2: J. C. Yen, IEEE Transactions on, 4(3), pp370-378 (1995)) based on a maximum correlation value, which was developed by Yen, et al. Furthermore, an image arithmetic operation called "Erode", which excludes pixels from a boundary portion of a target object, is performed, thereby clarifying a boundary of each particle. Thereafter, 20 particles each having an area of 0.1 µm² to 5 µm² are randomly selected. It can be determined that particles having an area within this range are primary particles of particles containing a niobium titanium-containing oxide. For each of the selected 20 particles, an aspect ratio and a particle size are measured as follows.

Note that in a case where a powdery sample such as particles is observed by SEM, the sample is attached to a carbon tape or the like and then attached to an SEM sample table, and then observed in a similar manner to that described above.

### (Method for Measuring Aspect Ratio)

An aspect ratio of each of the selected 20 particles and an average aspect ratio of the 20 particles can be measured in a similar manner to that described above with reference to FIGS. 3 and 4. The average aspect ratio of the 20 particles measured in the active material-containing layer can be regarded as an average aspect ratio of the particles containing the niobium titanium-containing oxide.

### (Method for Measuring Particle Size)

For each of the selected 20 particles, a particle size is measured using a diameter of an inscribed circle as the particle size.

An average value of the particle sizes of the 20 particles can be calculated as an average particle size of the particles containing the niobium titanium-containing oxide.

### (Method for Measuring Porosity)

A porosity of the active material-containing layer can be measured by a mercury intrusion method described below.

An electrode to be measured is put into a measurement device. In a case where the electrode to be measured is incorporated in a battery, the electrode is taken out by the method described above. As the measurement device, Shimadzu Autopore 9520 (Autopore 9520 model manufactured by Shimadzu Corporation) or a device having a function equivalent thereto is used.

By performing the mercury intrusion method on the input sample, a pore size distribution and a porosity of the electrode layer are obtained. Note that analysis principle of the mercury intrusion method is based on the following Washburn's equation. $D = - 4 γcosθ / P$

qHere, P is an applied pressure, D is a pore diameter, γ is a surface tension of mercury (480 dyne•cm⁻¹), and θ is a contact angle between mercury and a pore wall surface, which is 140°. Since γ and θ are constants, a relationship between the applied pressure P and the pore diameter D is obtained from Washburn's equation, and by measuring a mercury intrusion volume at this time, the pore diameter and a volume distribution thereof can be derived therefrom. For details of a measurement method, principle, and the like, refer to Non-Patent Literature 3 (JINBO Genji et al., "Fine Particle Handbook", Asakura Shoten (1991)), Non-Patent Literature 4 (edited by HAYAKAWA Sohachiro, "Method for Measuring Physical Properties of Powder", Asakura Shoten (1973)), and the like.

### (Method for Measuring Thickness of Current Collector)

The thickness of the current collector included in the electrode can be measured as follows.

First, the active material-containing layer included in the electrode to be measured is removed by dissolution or the like. The current collector from which the active material-containing layer has been removed is measured with a thickness meter. The average of thicknesses randomly measured at five locations in a size of 5 cm square is defined as the thickness of the current collector.

### (Method for Measuring Content of Electro-Conductive Agent)

The content of the electro-conductive agent, the type of a carbon material contained in the electro-conductive agent, and the content of each type of the carbon material can be specified by thermal gravimetric analysis (TG) on the electrode. For example, since a burning temperature is different between a fibrous carbon and a granular carbon, the amount of the fibrous carbon and the amount of the granular carbon can be measured by TG. Specifically, TG measurement is performed in air, the temperature is held at 500°C for one hour, and a weight loss is defined as the weight of the binder. Thereafter, the temperature is raised and held at 650°C for one hour, and a weight loss is defined as the weight of the fibrous carbon. Thereafter, the temperature is raised again and held at 800°C for one hour, and a weight loss is defined as the weight of the granular carbon.

According to the first approach, an electrode is provided. The electrode includes a current collector containing aluminum or an aluminum alloy, and an active material-containing layer held by the current collector. The active material-containing layer contains particles containing a niobium titanium-containing oxide. The electrode satisfies the following expression (1): $0.08 \leq I 1 / I 2 \leq 0.25$

I1 is an intensity of a first peak having the highest intensity within a range where 2θ is 46° or more and 48° or less in a diffraction diagram obtained by X-ray diffraction on a surface not held by the current collector in the active material-containing layer. I2 is an intensity of a second peak having the highest intensity within a range where 2θ is 25° or more and 27° or less in the diffraction diagram. In a cross section of the active material-containing layer along a thickness direction thereof, an average aspect ratio of the particles is 2 or less. Therefore, the charge-and-discharge cycle performance can be improved.

### (Second approach)

According to the second approach, a secondary battery including a negative electrode, a positive electrode, and an electrolyte is provided. The secondary battery includes the electrode according to the first approach as the negative electrode.

The secondary battery additionally can be equipped with a separator disposed between the positive electrode and the negative electrode. The negative electrode, the positive electrode, and the separator can constitute an electrode group. The electrolyte can be held in the electrode group.

The secondary battery additionally can be equipped with a container member that houses the electrode group and the electrolyte.

Furthermore, the secondary battery additionally can be equipped with a negative electrode terminal electrically connected to the negative electrode and a positive electrode terminal electrically connected to the positive electrode.

The secondary battery can be, for example, a lithium secondary battery. The secondary battery may be a nonaqueous electrolyte secondary battery including a nonaqueous electrolyte.

Hereinafter, the negative electrode, the positive electrode, the electrolyte, the separator, the container member, the negative electrode terminal, and the positive electrode terminal will be described in detail.

### (1) Negative electrode

A negative electrode included in the secondary battery according to the second approach may be, for example, the electrode described in the first approach. The active material-containing layer contained in this electrode may be a negative electrode active material-containing layer. The active material particles included in the electrode may be negative electrode active material particles.

### (2) Positive electrode

The positive electrode can include a positive electrode current collector and a positive electrode active material-containing layer. The positive electrode active material-containing layer can be formed on one side or both sides of the positive electrode current collector. The positive electrode active material-containing layer can contain a positive electrode active material, and optionally a conductive agent and a binder.

Examples of the positive electrode active material include oxides and sulfides. The positive electrode may include, as the positive electrode active material, one type of compound or two or more different types of compounds. Examples of the oxides and the sulfides may include compounds allowing lithium or lithium ions to be inserted thereinto or extracted therefrom.

Examples of such compounds include manganese dioxides (MnO₂), iron oxides, copper oxides, nickel oxides, lithium manganese composite oxides (e.g., LiₓMn₂O₄ or LiₓMnO₂; 0 < x ≤ 1), lithium nickel composite oxides (e.g., LiₓNiO₂; 0 < x ≤ 1), lithium cobalt composite oxides (e.g., LiₓCoO₂; 0 < x ≤ 1), lithium nickel cobalt composite oxides (e.g., LiₓNi_{1-y}Co_{y}O₂; 0 < x ≤ 1, 0 < y < 1), lithium manganese cobalt composite oxides (e.g., LiₓMn_{y}Co_{1-y}O₂; 0 < x ≤ 1, 0 < y < 1), lithium manganese nickel composite oxides having a spinel structure (e.g., LiₓMn_{2-y}Ni_{y}O₄; 0 < x ≤ 1, 0 < y < 2), lithium phosphates having an olivine structure (e.g., LiₓFePO₄; 0 < x ≤ 1, LiₓFe_{1-y}Mn_{y}PO₄; 0 < x ≤ 1, 0 < y < 1, and LiₓCoPO₄; 0 < x ≤ 1), iron sulfates [Fe₂(SO₄)₃], vanadium oxides (e.g., V₂O₅), and lithium nickel cobalt manganese composite oxides (LiₓNi_{1-y-z}Co_{y}Mn_{z}O₂; 0 < x ≤ 1, 0 < y < 1, 0 < z < 1, y + z < 1).

Among the above, examples of compounds more preferable as the positive electrode active material include lithium manganese composite oxides having a spinel structure (e.g., LiₓMn₂O₄; 0 < x ≤ 1), lithium nickel composite oxides (e.g., LiₓNiO₂; 0 < x ≤ 1), lithium cobalt composite oxides (e.g., LiₓCoO₂; 0 < x ≤ 1), lithium nickel cobalt composite oxides (e.g., LiₓNi_{1-y}Co_{y}O₂; 0 < x ≤ 1, 0 < y < 1), lithium manganese nickel composite oxides having a spinel structure (e.g., LiₓMn_{2-y}Ni_{y}O₄; 0 < x ≤ 1, 0 < y < 2), lithium manganese cobalt composite oxides (e.g., LiₓMn_{y}Co_{1-y}O₂; 0 < x ≤ 1, 0 < y < 1), lithium iron phosphates (e.g., LiₓFePO₄; 0 < x ≤ 1), and lithium nickel cobalt manganese composite oxides (LiₓNi_{1-y-z}Co_{y}Mn_{z}O₂; 0 < x ≤ 1, 0 < y < 1, 0 < z < 1, y + z < 1). The positive electrode potential can be made high by using these positive electrode active materials.

When a room temperature molten salt is used as the electrolyte of the battery, it is preferable to use a positive electrode active material including lithium iron phosphate, LiₓVPO₄F (0 ≤ x ≤ 1), lithium manganese composite oxide, lithium nickel composite oxide, lithium nickel cobalt composite oxide, or a mixture thereof. Since these compounds have low reactivity with room temperature molten salts, cycle life can be improved. Details regarding the room temperature molten salt are described later.

The positive electrode active material may preferably have primary particle sizes in the range of 100 nm to 1 µm. The positive electrode active material having primary particle sizes of 100 nm or more may be easy to handle in industrial applications. The positive electrode active material having primary particle sizes of 1 µm or less may allow lithium ions to be smoothly diffused in solid.

The positive electrode active material may preferably have a specific surface area in the range of 0.1 m²/g to 10 m²/g. The positive electrode active material having a specific surface area of 0.1 m²/g or more may secure an adequately large site for insertion and extraction of Li ions. The positive electrode active material having a specific surface area of 10 m²/g or less may be easy to handle in industrial applications and may ensure a favorable charge-and-discharge cycle.

The binder is blended in order to fill a gap between the dispersed positive electrode active materials and to bind the positive electrode active material and the positive electrode current collector. Examples of the binder include polytetrafluoroethylene (PTFE), polyvinylidene fluoride (PVdF), fluorine rubber, polyacrylic acid compounds, imide compounds, carboxy methyl cellulose (CMC), and salts of CMC. One of these may be used as the binder, or a combination of two or more thereof may be used as the binder.

A conductive agent is added in order to increase the current-collecting performance and suppress the contact resistance between the positive electrode active material and the positive electrode current collector. Examples of the conductive agent include carbonaceous materials such as vapor grown carbon fibers (VGCF), carbon black such as acetylene black, graphite, carbon nanofibers and carbon nanotubes. One of these materials may be used as the conductive agent, or two or more of these materials may be combined and used as the conductive agent. In addition, the conductive agent can be omitted.

In the positive electrode active material-containing layer, it is preferable to combine the positive electrode active material and the binder in a mass ratio of the positive electrode active material in a range from 80% to 98% and the binder in a range from 1% to 20%.

By making the amount of the binder be 1% by mass or greater, sufficient electrode strength is obtained. In addition, the binder may function as an insulator. For this reason, if the amount of the binder is kept at 20% by mass or less, the amount of insulation contained in the electrode is decreased, and therefore the internal resistance can be reduced.

In the case of adding the conductive agent, it is preferable to combine the positive electrode active material, the binder, and the conductive agent in a mass ratio of the positive electrode active material in a range from 77% to 98%, the binder in a range from 1% to 20%, and conductive agent in a range from 1% to 15%.

By making the amount of the conductive agent be 1% by mass or greater, the effects described above can be exhibited. Also, by keeping the amount of the conductive agent to 15% by mass or less, the proportion of the conductive agent in contact with electrolyte can be lowered. If this proportion is low, decomposition of the electrolyte under high-temperature storage can be reduced.

The positive electrode current collector is preferably an aluminum foil or an aluminum alloy foil containing one or more elements selected from Mg, Ti, Zn, Ni, Cr, Mn, Fe, Cu, and Si.

The thickness of the aluminum foil or aluminum alloy foil is preferably within a range from 5 µm to 20 µm, and is more preferably 15 µm or less. The purity of the aluminum foil is preferably 99% by mass or more. The content of transition metals such as iron, copper, nickel, and chromium contained in the aluminum foil or aluminum alloy foil is preferably 1% by mass or less.

In addition, the positive electrode current collector can include a portion where the positive electrode active material-containing layer is not formed on the surface thereof. This portion can serve as a positive electrode tab.

The positive electrode can be produced, for example, by the following method. First, an active material, a conductive agent, and a binder are suspended in a solvent to prepare a slurry. This slurry is applied to one side or both sides of the current collector. Next, the applied slurry is dried to obtain a laminate of the active material-containing layer and the current collector. Thereafter, the laminate is pressed. The positive electrode is thus produced.

Alternatively, the positive electrode may be produced by the following method. First, an active material, a conductive agent, and a binder are mixed to obtain a mixture. The mixture is then formed into pellets. Subsequently, these pellets can be arranged on the current collector to obtain a positive electrode.

### (3) Electrolyte

Examples of the electrolyte may include nonaqueous liquid electrolyte or nonaqueous gel electrolyte. The nonaqueous liquid electrolyte may be prepared by dissolving an electrolyte salt used as solute in an organic solvent. The electrolyte salt may preferably have a concentration in the range of 0.5 mol/L to 2.5 mol/L.

Examples of the electrolyte salt include lithium salts such as lithium perchlorate (LiClO₄), lithium hexafluorophosphate (LiPF₆), lithium tetrafluoroborate (LiBF₄), lithium hexafluoroarsenate (LiAsF₆), lithium trifluoromethanesulfonate (LiCF₃SO₃), and lithium bistrifluoromethylsulfonylimide [LiN(CF₃SO₂)₂], and mixtures thereof. The electrolyte salt is preferably resistant to oxidation even at a high potential, and most preferably LiPF₆.

Examples of the organic solvent include cyclic carbonates such as propylene carbonate (PC), ethylene carbonate (EC), or vinylene carbonate (VC); linear carbonates such as diethyl carbonate (DEC), dimethyl carbonate (DMC), or methyl ethyl carbonate (MEC); cyclic ethers such as tetrahydrofuran (THF), 2-methyl tetrahydrofuran (2-MeTHF), or dioxolane (DOX); linear ethers such as dimethoxy ethane (DME) or diethoxy ethane (DEE); γ-butyrolactone (GBL), acetonitrile (AN), and sulfolane (SL). These organic solvents may be used singularly or as a mixed solvent.

The gel nonaqueous electrolyte is prepared by obtaining a composite of a liquid nonaqueous electrolyte and a polymeric material. Examples of the polymeric material include polyvinylidene fluoride (PVDF), polyacrylonitrile (PAN), polyethylene oxide (PEO), and mixtures thereof.

Alternatively, besides the nonaqueous liquid electrolyte and the nonaqueous gel electrolyte, a roomtemperature molten salt (ionic melt) containing lithium ions, a polymer solid electrolyte, an inorganic solid electrolyte, and the like may also be used as the nonaqueous electrolyte.

The room temperature molten salt (ionic melt) indicates compounds among organic salts made of combinations of organic cations and anions, which are able to exist in a liquid state at room temperature (15°C to 25°C). The room temperature molten salt includes a room temperature molten salt which exists alone as a liquid, a room temperature molten salt which becomes a liquid upon mixing with an electrolyte salt, a room temperature molten salt which becomes a liquid when dissolved in an organic solvent, and mixtures thereof. In general, the melting point of the room temperature molten salt used in secondary batteries is 25°C or below. The organic cations generally have a quaternary ammonium framework.

A polymer solid electrolyte is prepared by dissolving an electrolyte salt into a polymer material and solidifying the result.

An inorganic solid electrolyte is solid material having Li-ion conductivity.

The electrolyte may also be an aqueous electrolyte containing water.

The aqueous electrolyte includes an aqueous solvent and an electrolyte salt. The aqueous electrolyte is liquid, for example. A liquid aqueous electrolyte is an aqueous solution prepared by dissolving an electrolyte salt as the solute in an aqueous solvent. The aqueous solvent is a solvent containing 50% or more water by volume, for example. The aqueous solvent may also be pure water.

The aqueous electrolyte may be a gel-like aqueous electrolyte obtained by combining a liquid aqueous electrolyte and a polymer material. Examples of the polymer material include polyvinylidene fluoride (PVdF), polyacrylonitrile (PAN), and polyethylene oxide (PEO).

The aqueous electrolyte preferably contains 1 mol or greater of aqueous solvent per 1 mol of the salt as the solute. In an even more preferably aspect, the aqueous electrolyte contains 3.5 mol or greater of aqueous solvent per 1 mol of the salt as the solute.

That the aqueous electrolyte contains water can be confirmed by gas chromatography - mass spectrometry (GC-MS) measurement. Also, the salt concentration and the amount of water contained in the aqueous electrolyte can be computed by measurement using inductively coupled plasma (ICP) emission spectroscopy or the like, for example. By measuring out a prescribed amount of the aqueous electrolyte and computing the contained salt concentration, the molar concentration (mol/L) can be computed. Also, by measuring the specific gravity of the aqueous electrolyte, the number of moles of the solute and the solvent can be computed.

The aqueous electrolyte is prepared by dissolving the electrolyte salt into the aqueous solvent at a concentration from 1 to 12 mol/L for example.

To suppress electrolysis of the aqueous electrolyte, LiOH, Li₂SO₄, or the like can be added to adjust the pH. The pH is preferably from 3 to 13, and more preferably from 4 to 12.

### (4) Separator

The separator is formed of, for example, a porous film containing polyethylene (polyethylene; PE), polypropylene (polypropylene; PP), cellulose, or polyvinylidene fluoride (PVdF), or a synthetic resin nonwoven fabric. From the viewpoint of safety, it is preferable to use a porous film formed from polyethylene or polypropylene. This is because these porous films can be melted at a predetermined temperature to interrupt the current.

### (5) Container member

As the container member, for example, a container made of laminate film or a container made of metal may be used.

The thickness of the laminate film is, for example, 0.5 mm or less, and preferably 0.2 mm or less.

As the laminate film, used is a multilayer film including multiple resin layers and a metal layer sandwiched between the resin layers. The resin layer may include, for example, a polymeric material such as polypropylene (PP), polyethylene (PE), nylon, or polyethylene terephthalate (PET). The metal layer is preferably made of aluminum foil or an aluminum alloy foil, so as to reduce weight. The laminate film may be formed into the shape of a container member, by heat-sealing.

The wall thickness of the metal container is, for example, 1 mm or less, more preferably 0.5 mm or less, and still more preferably 0.2 mm or less.

The metal case is made, for example, of aluminum or an aluminum alloy. The aluminum alloy preferably contains elements such as magnesium, zinc, or silicon. If the aluminum alloy contains a transition metal such as iron, copper, nickel, or chromium, the content thereof is preferably 100 ppm by mass or less.

The shape of the container member is not particularly limited. The shape of the container member may be, for example, flat (thin), square, cylinder, coin, or button-shaped. The container member may be appropriately selected depending on battery size and use of the battery.

### (6) Negative electrode terminal

The negative electrode terminal may be made of a material that is electrochemically stable at the potential at which Li is inserted into and extracted from the above-described negative electrode active material, and has electrical conductivity. Specific examples of the material for the negative electrode terminal include copper, nickel, stainless steel, aluminum, and aluminum alloy containing at least one element selected from the group consisting of Mg, Ti, Zn, Mn, Fe, Cu, and Si. Aluminum or aluminum alloy is preferred as the material for the negative electrode terminal. The negative electrode terminal is preferably made of the same material as the negative electrode current collector, in order to reduce the contact resistance with the negative electrode current collector.

### (7) Positive electrode terminal

The positive electrode terminal may be made of, for example, a material that is electrically stable in the potential range of 3 V to 5 V (vs. Li/Li⁺) relative to the redox potential of lithium, and has electrical conductivity. Examples of the material for the positive electrode terminal include aluminum and an aluminum alloy containing one or more selected from the group consisting of Mg, Ti, Zn, Mn, Fe, Cu, and Si. The positive electrode terminal is preferably made of the same material as the positive electrode current collector, in order to reduce contact resistance with the positive electrode current collector.

Next, the secondary battery according to the approach will be described in detail with reference to the drawings.

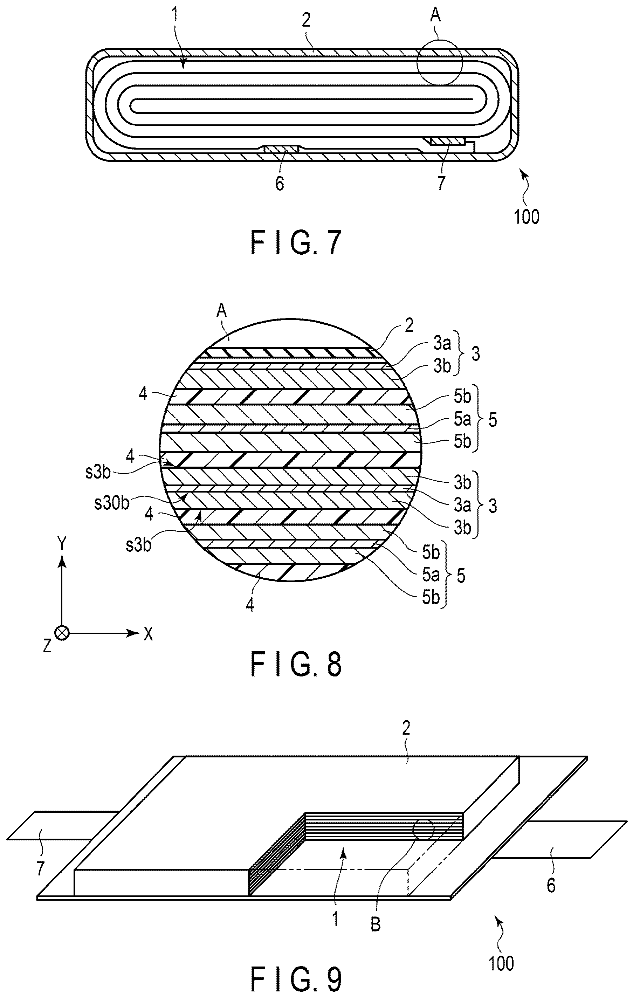

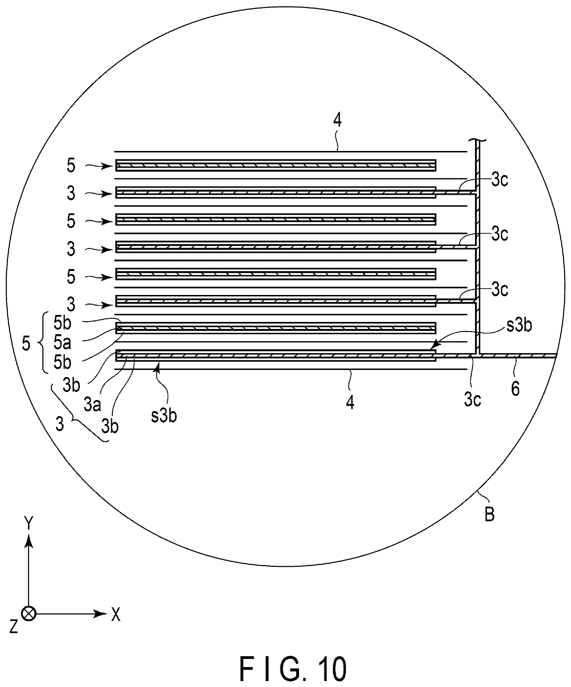

FIG. 7 is a sectional view schematically showing one example of a secondary battery according to an approach. FIG. 8 is an enlarged sectional view of a portion A of the secondary battery shown in FIG. 7. In FIG. 8 and FIG. 10 described later, the Y axis is a direction along a thickness direction of the negative electrode. The X axis is a direction orthogonal to the Y axis and along an in-plane direction of the negative electrode current collector. The Z axis is a direction orthogonal to the X axis and the Y axis and along the in-plane direction of the negative electrode current collector.

The secondary battery 100 shown in FIG. 7 and FIG. 8 includes a bag-shaped container member 2 shown in FIG. 7, an electrode group 1 shown in FIG. 7 and FIG. 8, and an electrolyte (not shown). The electrode group 1 and the electrolyte are stored in the bag-shaped container member 2. The electrolyte (not shown) is held in the electrode group 1.

The bag-shaped container member 2 is formed from a laminate film including two resin layers and a metal layer disposed therebetween.

As shown in FIG. 7, the electrode group 1 is a flat wound electrode group. The flat wound electrode group 1 includes negative electrodes 3, separators 4, and positive electrodes 5 as shown in FIG. 8. The separator 4 is disposed between the negative electrode 3 and the positive electrode 5.

The negative electrode 3 includes a negative electrode current collector 3a and a negative electrode active material-containing layer 3b. In the negative electrode active material-containing layer 3b, a surface held by the negative electrode current collector 3a is indicated by s30b, and a surface not held by the negative electrode current collector 3a is indicated by s3b. In a portion of the negative electrode 3 located in an outermost shell of a wound electrode group 1, as illustrated in FIG. 8, the negative electrode active material-containing layer 3b is formed only on an inner surface side of the negative electrode current collector 3a. In the other part of the negative electrode 3, the negative electrode active material-containing layers 3b are formed on both surfaces of the negative electrode current collector 3a.

A positive electrode 5 includes a positive electrode current collector 5a and a positive electrode active material-containing layer 5b formed on both sides thereof.

As shown in FIG. 7, a negative electrode terminal 6 and a positive electrode terminal 7 are positioned near the outer end of the wound electrode group 1. The negative electrode terminal 6 is connected to the outermost part of the negative electrode current collector 3a. In addition, the positive electrode terminal 7 is connected to the outermost part of the positive electrode current collector 5a. The negative electrode terminal 6 and the positive electrode terminal 7 extend outward from opening portions of the bag-shaped container member 2. A thermoplastic resin layer is provided on the inner surface of the bag-shaped container member 2, and the opening of the bag-shaped container member 2 are closed by thermal fusion bonding of the thermoplastic resin layer.

The secondary battery according to the approach is not limited to the secondary battery having the structure shown in FIGS. 7 and 8, and may be, for example, a battery having a structure shown in FIGS. 9 and 10.

FIG. 9 is a partial cut-away sectional perspective view schematically showing another example of the secondary battery according to the approach. FIG. 10 is an enlarged sectional view of a portion B of the secondary battery shown in FIG. 9.

The secondary battery 100 shown in FIGS. 9 and 10 includes an electrode group 1 shown in FIGS. 9 and 10, a container member 2 shown in FIG. 9, and an electrolyte (not shown). The electrode group 1 and the electrolyte are stored in the container member 2. The electrolyte is held in the electrode group 1.

The container member 2 is made of a laminate film including two resin layers and a metal layer intervening therebetween.

As shown in FIG. 10, the electrode group 1 is a laminated electrode group. The laminated electrode group 1 has a structure in which a negative electrode 3 and a positive electrode 5 are alternately laminated with a separator 4 intervening therebetween.

The electrode group 1 includes a plurality of the negative electrodes 3. Each of the plurality of negative electrodes 3 includes the negative electrode current collector 3a and the negative electrode active material-containing layers 3b supported on both surfaces of the negative electrode current collector 3a. In the negative electrode active material-containing layer 3b, a surface held by the negative electrode current collector 3a is indicated by s30b, and a surface not held by the negative electrode current collector 3a is indicated by s3b. The electrode group 1 includes a plurality of positive electrodes 5. Each of the plurality of positive electrodes 5 includes a positive electrode current collector 5a and positive electrode active material-containing layers 5b supported on both surfaces of the positive electrode current collector 5a.

The negative electrode current collector 3a of each negative electrode 3 includes a portion 3c on one side where the negative electrode active material-containing layer 3b is not held on any surfaces. This portion 3c acts as a negative electrode tab. As shown in FIG. 10, the portion 3c acting as the negative electrode tab does not overlap the positive electrode 5. In addition, a plurality of negative electrode tabs (portion 3c) is electrically connected to a belt-shaped negative electrode terminal 6. A tip of the belt-shaped negative electrode terminal 6 is drawn outward from a container member 2.

In addition, although not shown, the positive electrode current collector 5a of each positive electrode 5 includes a portion on one side where the positive electrode active material-containing layer 5b is not held on any surfaces. This portion acts as a positive electrode tab. Like the negative electrode tab (portion 3c), the positive electrode tab does not overlap the negative electrode 3. In addition, the positive electrode tab is positioned on the opposite side of the electrode group 1 with respect to the negative electrode tab (portion 3c). The positive electrode tab is electrically connected to a belt-shaped positive electrode terminal 7. A tip of the belt-shaped positive electrode terminal 7 is positioned on the opposite side to the negative electrode terminal 6 and is drawn outward from the container member 2.

A secondary battery according to a second approach includes the electrode according to the first approach. Therefore, the secondary battery according to the second approach can achieve excellent charge-and-discharge cycle performance.

### (Third Approach)

According to the third approach, a battery module is provided. The battery module according to the third approach is equipped with a plurality of the secondary batteries according to the second approach.

In the battery module according to the approach, individual unit cells may be electrically connected in series or in parallel, or may be arranged in combination of series connection and parallel connection.

Next, an example of the battery module according to the approach will be described with reference to the drawings.

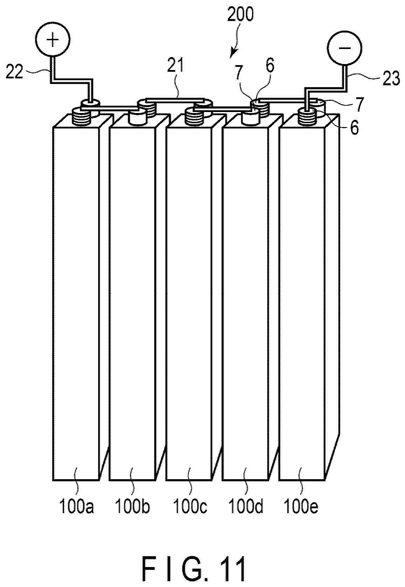

FIG. 11 is a perspective view schematically showing an example of the battery module according to the approach. The battery module 200 shown in FIG. 11 includes five unit cells 100a to 100e, four bus bars 21, a positive electrode-side lead 22, and a negative electrode-side lead 23. Each of the five unit cells 100a to 100e is the secondary battery according to the second approach.

The busbar 21 connects a negative electrode terminal 6 of a single unit cell 100a to a positive electrode terminal 7 of an adjacently positioned unit cell 100b. In this way, the five unit cells 100a to 100e are connected in series by the four bus bars 21. That is, the battery module 200 shown in FIG. 11 is a battery module of five in-series connection. Although an example is not illustrated, in a battery module containing a plurality of unit cells electrically connected in parallel, the plurality of unit cells may be electrically connected by connecting the plurality of negative electrode terminals to each other with busbars and also connecting the plurality of positive electrode terminals to each other with busbars, for example.

The positive electrode terminal 7 of at least one battery among the five unit cells 100a to 100e is electrically connected to a positive electrode lead 22 for external connection. Also, the negative electrode terminal 6 of at least one battery among the five unit cells 100a to 100e is electrically connected to a negative electrode lead 23 for external connection.

A battery module according to a third approach includes the secondary battery according to the second approach. Therefore, the battery module according to the third approach can achieve charge-and-discharge cycle performance.

### (Fourth Approach)

According to the fourth approach, a battery pack is provided. The battery pack includes the battery module according to the third approach. The battery pack may also be equipped with a single secondary battery according to the second approach instead of the battery module according to the third approach.

The battery pack according to the approach may further include a protective circuit. The protective circuit has a function to control charging and discharging of the secondary battery. Alternatively, a circuit included in equipment where the battery pack serves as a power source (for example, electronic devices, vehicles, and the like) may be used as the protective circuit for the battery pack.

Moreover, the battery pack according to the approach may further include an external power distribution terminal. The external power distribution terminal is configured to externally output current from the secondary battery, and to input external current into the secondary battery. In other words, when the battery pack is used as a power source, the current is provided out via the external power distribution terminal. When the battery pack is charged, the charging current (including regenerative energy of a motive force of vehicles such as automobiles) is provided to the battery pack via the external power distribution terminal.

Next, an example of a battery pack according to the approach will be described with reference to the drawings.

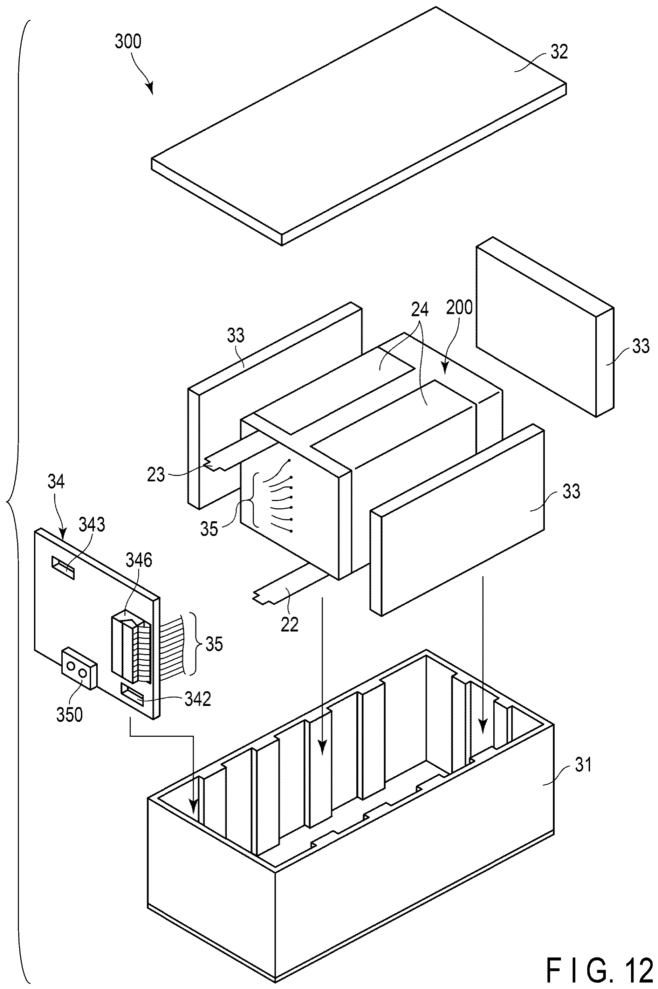

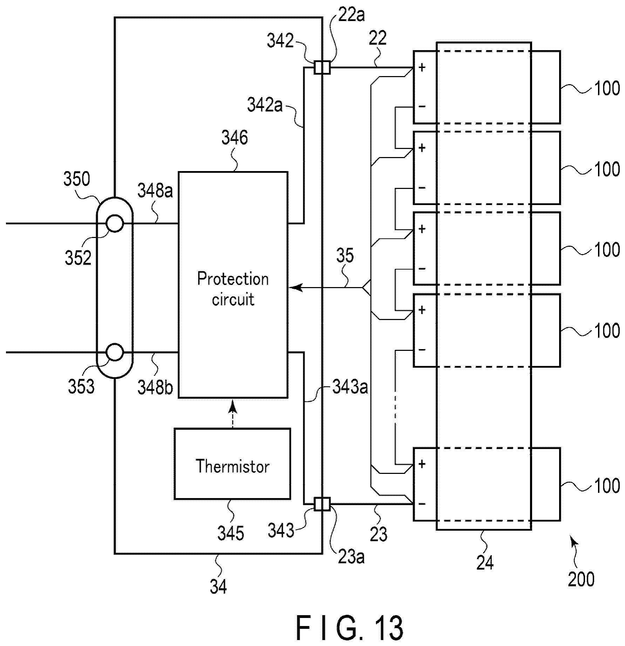

FIG. 12 is an exploded perspective view schematically showing an example of the battery pack according to the approach. FIG. 13 is a block diagram showing an example of an electric circuit of the battery pack shown in FIG. 12.

A battery pack 300 shown in FIGS. 12 and 13 includes a housing container 31, a lid 32, protective sheets 33, a battery module 200, a printed wiring board 34, wires 35, and an insulating plate (not shown).

A housing container 31 shown in FIG. 12 is a bottomed-square-shaped container having a rectangular bottom surface. The housing container 31 is configured to house protective sheet 33, a battery module 200, a printed wiring board 34, and wires 35. A lid 32 has a rectangular shape. The lid 32 covers the housing container 31 to house the battery module 200 and the like. Although not shown, opening(s) or connection terminal(s) for connecting to external device(s) and the like are provided on the housing container 31 and lid 32.

The battery module 200 includes plural unit cells 100, a positive electrode-side lead 22, a negative electrode-side lead 23, and an adhesive tape 24.

At least one in the plurality of unit cells 100 is a secondary battery according to the second approach. Each unit cell 100 in the plurality of unit cells 100 is electrically connected in series, as shown in FIG. 13. The plurality of unit cells 100 may alternatively be electrically connected in parallel, or connected in a combination of in-series connection and in-parallel connection. If the plurality of unit cells 100 is connected in parallel, the battery capacity increases as compared to a case where they are connected in series.

The adhesive tape 24 fastens the plural unit cells 100. The plural unit cells 100 may be fixed using a heat-shrinkable tape in place of the adhesive tape 24. In this case, the protective sheets 33 are arranged on both side surfaces of the battery module 200, and the heat-shrinkable tape is wound around the battery module 200 and protective sheets 33. After that, the heat-shrinkable tape is shrunk by heating to bundle the plural unit cells 100.

One terminal of a positive electrode lead 22 is connected to a battery module 200. One terminal of the positive electrode lead 22 is electrically connected to the positive electrode of one or more unit cells 100. One terminal of a negative electrode lead 23 is connected to the battery module 200. One terminal of the negative electrode lead 23 is electrically connected to the negative electrode of one or more unit cells 100.

The printed wiring board 34 is arranged on the inner surface of the housing container 31 along the short side direction. The printed wiring board 34 includes a positive electrode connector 342, a negative electrode connector 343, a thermistor 345, a protective circuit 346, wirings 342a and 343a, an external power distribution terminal 350, a plus-side wire (positive-side wire) 348a, and a minus-side wire (negative-side wire) 348b. One principal surface of the printed wiring board 34 faces one side surface of the battery module 200. An insulating plate (not shown) is disposed in between the printed wiring board 34 and the battery module 200.

The other terminal 22a of the positive electrode lead 22 is electrically connected to a positive electrode connector 342. The other terminal 23a of the negative electrode lead 23 is electrically connected to a negative electrode connector 343.

The thermistor 345 is fixed to one principal surface of the printed wiring board 34. The thermistor 345 detects the temperature of each unit cell 100 and transmits detection signals to the protective circuit 346.

The external power distribution terminal 350 is fixed to the other principal surface of the printed wiring board 34. The external power distribution terminal 350 is electrically connected to device(s) that exists outside the battery pack 300. The external power distribution terminal 350 includes a positive side terminal 352 and a negative side terminal 353.

The protective circuit 346 is fixed to the other principal surface of the printed wiring board 34. The protective circuit 346 is connected to the positive side terminal 352 via the plus-side wire 348a. The protective circuit 346 is connected to the negative side terminal 353 via the minus-side wire 348b. In addition, the protective circuit 346 is electrically connected to the positive electrode connector 342 via the wiring 342a. The protective circuit 346 is electrically connected to the negative electrode connector 343 via the wiring 343a. Furthermore, the protective circuit 346 is electrically connected to each unit cell 100 in the plurality of unit cells 100 via the wires 35.

The protective sheets 33 are arranged on both inner surfaces of the housing container 31 along the long side direction and on one inner surface of the housing container 31 along the short side direction facing the printed wiring board 34 through the battery module 200. The protective sheet 33 is made of, for example, resin or rubber.

The protective circuit 346 controls charging and discharging of the plurality of unit cells 100. The protective circuit 346 is also configured to cut off electric connection between the protective circuit 346 and the external power distribution terminal 350 (the positive side terminal 352 and the negative side terminal 353) to the external devices, based on detection signals transmitted from the thermistor 345 or detection signals transmitted from each unit cell 100 or the battery module 200.

An example of the detection signal transmitted from the thermistor 345 is a signal indicating that the temperature of the unit cell(s) 100 is detected to be a predetermined temperature or more. An example of the detection signal transmitted from each unit cell 100 or the battery module 200 is a signal indicating detection of over-charge, over-discharge, and overcurrent of the unit cell(s) 100. When detecting over-charge or the like for each of the unit cells 100, the battery voltage may be detected, or a positive electrode potential or negative electrode potential may be detected. In the latter case, a lithium electrode to be used as a reference electrode may be inserted into each unit cell 100.

Note, that as the protective circuit 346, a circuit included in a device (for example, an electronic device or an automobile) that uses the battery pack 300 as a power source may be used.

As described above, the battery pack 300 includes the external power distribution terminal 350. Hence, the battery pack 300 can output current from the battery module 200 to an external device and input current from an external device to the battery module 200 via the external power distribution terminal 350. In other words, when using the battery pack 300 as a power source, the current from the battery module 200 is supplied to an external device via the external power distribution terminal 350. When charging the battery pack 300, a charge current from an external device is supplied to the battery pack 300 via the external power distribution terminal 350. If the battery pack 300 is used as an onboard battery, the regenerative energy of the motive force of a vehicle can be used as the charge current from the external device.

Note that the battery pack 300 may include a plurality of battery modules 200. In this case, the plurality of battery modules 200 may be connected in series, in parallel, or connected in a combination of in-series connection and in-parallel connection. The printed wiring board 34 and the wires 35 may be omitted. In this case, the positive electrode lead 22 and the negative electrode lead 23 may be used as the positive side terminal and the negative side terminal of the external power distribution terminal, respectively.

Such a battery pack is used for, for example, an application required to have the excellent cycle performance when a large current is taken out. More specifically, the battery pack is used as, for example, a power source for electronic devices, a stationary battery, or an onboard battery for various kinds of vehicles. An example of the electronic device is a digital camera. The battery pack is particularly favorably used as an onboard battery.

A battery pack according to a fourth approach includes the secondary battery according to the second approach or the battery module according to the third approach. Therefore, according to the fourth approach, it is possible to provide a battery pack including a secondary battery or a battery module capable of achieving excellent charge-and-discharge cycle performance.

### Examples

Examples will be described below, but the approaches are not limited to Examples described below.

### (Example 1)

### <Production of Electrode>

Titanium dioxide (TiO₂) and niobium pentoxide (Nb₂O₅) were prepared as starting materials. Powders of TiO₂ and Nb₂O₅ were mixed at a molar ratio of 1 : 1 and were subjected to a dry pulverization treatment. The pulverized starting materials were fired at 1100°C for ten hours. Coarse particles obtained by firing were dry-pulverized with a hammer mill, and then subjected to a heat treatment at 400°C. Thus, particles of TiNb₂O₇ as a niobium titanium-containing oxide were obtained. The obtained TiNb₂O₇ particles were used as an active material.

Carbon nanotubes (CNT) as a fibrous carbon material and acetylene black (AB) as a granular carbon material were prepared as an electro-conductive agent, and carboxymethyl cellulose and a styrene-butadiene rubber were prepared as a binder.

The active material, the carbon nanotube, the acetylene black, the carboxymethyl cellulose, and the styrene-butadiene rubber were mixed at ratios of 96.5% by mass, 0.48% by mass, 0.10% by mass, 0.96% by mass, and 1.96% by mass, respectively, using pure water as a solvent to prepare a slurry.

This slurry was applied to both surfaces of a current collector made of an aluminum foil having a thickness of 15 µm such that a one-surface electrode application amount after drying was 100 g/m². The slurry was dried to obtain a stack, and then the stack was subjected to roll pressing to obtain an electrode in which the active material-containing layer was held by the current collector. A density (electrode density) of the active material-containing layer provided on one surface of the obtained electrode was 2.6 g/cm³.

### (Example 2)

In the production of the niobium titanium-containing oxide, the firing temperature was changed to 1150°C. In the production of the electrode slurry, the ratios (electrode composition) of the active material, the carbon nanotube, the acetylene black, the carboxymethyl cellulose, and the styrene-butadiene rubber were changed to 96.3% by mass, 0.77% by mass, 0.048% by mass, 0.96% by mass, and 1.92% by mass, respectively. An electrode was produced in a similar manner to Example 1 except for the above.

### (Example 3)

An electrode was produced in a similar manner to Example 1 except that, in the production of the electrode slurry, the ratios of the active material, the carbon nanotube, the acetylene black, the carboxymethyl cellulose, and the styrene-butadiene rubber were changed to 96.3% by mass, 0.77% by mass, 0.048% by mass, 0.96% by mass, and 1.92% by mass, respectively.

### (Example 4)

In the production of the niobium titanium-containing oxide, the firing temperature was changed to 1150°C. In the production of the electrode slurry, the ratios of the active material, the carbon nanotube, the acetylene black, the carboxymethyl cellulose, and the styrene-butadiene rubber were changed to 96.6% by mass, 0.48% by mass, 0.048% by mass, 0.97% by mass, and 1.9% by mass, respectively. An electrode was produced in a similar manner to Example 1 except for the above.

### (Example 5)

Titanium oxysulfate and niobium pentachloride were prepared as starting materials for synthesis of a niobium titanium-containing oxide. These starting materials were mixed such that a molar ratio between Ti and Nb was 1 : 2 and put into a mixed solution of sulfuric acid and ethanol, and ammonia water was added dropwise thereto such that a solution pH was 8. Thereafter, the mixture was put into an autoclave, and was subjected to a heat treatment at 160°C for three hours. Thereafter, the powder after the treatment was washed with water, freeze-dried, and then subjected to a heat treatment at 1000°C for 30 minutes to obtain particles of TiNb₂O₇ as a niobium titanium-containing oxide. An electrode was produced in a similar manner to Example 4 except that the obtained TiNb₂O₇ particles were used as an active material.

### (Example 6)

An electrode was produced in a similar manner to Example 4 except that the firing temperature was 1150°C and the firing time was 12 hours in the production of the niobium titanium-containing oxide.

### (Example 7)

A niobium titanium-containing oxide similar to that in Example 2 was used, and an electrode composition similar to that in Example 4 was used. Roll pressing was performed such that a density (electrode density) of the active material-containing layer was 2.7 g/cm³. An electrode was produced in a similar manner to Example 1 except for the above.

### (Example 8)

An electrode was produced in a similar manner to Example 1 except that an electrode composition similar to that in Example 4 was used, and roll pressing was performed such that the density (electrode density) of the active material-containing layer was 2.55 g/cm³.

### (Examples 9 and 10)

An electrode was produced in a similar manner to Example 1 except that the thickness of the current collector was changed as presented in Table 2 in the production of the electrode.

### (Example 11)

In the production of the electrode, the active material, the carbon nanotube, the acetylene black, the carboxymethyl cellulose, and the styrene-butadiene rubber were mixed at ratios of 96.1% by mass, 0.77% by mass, 0.24% by mass, 0.96% by mass, and 1.93% by mass, respectively, using pure water as a solvent to prepare a slurry. An electrode was produced in a similar manner to Example 1 except for the above.

### (Example 12)

In the production of the electrode, the active material, the carbon nanotube, the acetylene black, the carboxymethyl cellulose, and the styrene-butadiene rubber were mixed at ratios of 96.7% by mass, 0.39% by mass, 0.05% by mass, 0.97% by mass, and 1.89% by mass, respectively, using pure water as a solvent to prepare a slurry. An electrode was produced in a similar manner to Example 1 except for the above.

### (Example 13)

In the production of the electrode, the active material, the carbon nanotube, the acetylene black, the carboxymethyl cellulose, and the styrene-butadiene rubber were mixed at ratios of 95.9% by mass, 1.15% by mass, 0.05% by mass, 0.96% by mass, and 1.94% by mass, respectively, using pure water as a solvent to prepare a slurry. An electrode was produced in a similar manner to Example 1 except for the above.

### (Comparative Example 1)

In the preparation of the niobium titanium-containing oxide, the firing temperature was 1200°C and the firing time was eight hours. Roll pressing was performed such that a density (electrode density) of the active material-containing layer was 2.5 g/cm³. An electrode was produced in a similar manner to Example 1 except for the above.

### (Comparative Example 2)

An electrode was produced in a similar manner to Example 1 except that an electrode composition similar to that in Example 4 was used, and roll pressing was performed such that the density (electrode density) of the active material-containing layer was 2.85 g/cm³.

### (Comparative Example 3)

An electrode was produced in a similar manner to Example 4 except that roll pressing was performed such that the density (electrode density) of the active material-containing layer was 2.45 g/cm³.

### (Measurement)

For each of the electrodes of Examples and Comparative Examples, the average aspect ratio of the particles containing the niobium titanium-containing oxide, I1, I2, I1/I2, the average particle size (µm) of the particles containing the niobium titanium-containing oxide, the porosity (%), the thickness (µm) of the current collector, the content (% by mass) of the electro-conductive agent, the content (% by mass) of the granular carbon material, and the content (% by mass) of the fibrous carbon material were measured by the methods described above.

Measurement results are presented in Tables 1 to 3.

Furthermore, in order to test performance of the electrodes of Examples and Comparative Examples, secondary batteries were produced as follows using the electrodes of Examples and Comparative Examples. The secondary batteries were produced by producing positive electrodes as counter electrodes, and then assembling the secondary batteries using the electrodes of Examples and Comparative Examples as negative electrodes.

### <Production of Positive Electrode>

To N-methylpyrrolidone (NMP) as a solvent, LiNi_{0.8}Co_{0.1}Mn_{0.1}O₂ as a positive electrode active material, acetylene black as an electro-conductive agent, and PVdF as a binder were added at a ratio of 100 parts by mass, 3 parts by mass, and 2 parts by mass, respectively, and mixed to prepare a positive electrode slurry.

This positive electrode slurry was applied to both surfaces of a current collector made of an aluminum foil such that a one-surface electrode application amount after drying was 118 g/m². The positive electrode slurry was dried to obtain a stack, and then the stack was subjected to roll pressing to obtain a positive electrode. A density (electrode density) of the active material-containing layer provided on one surface of the obtained positive electrode was 3.3 g/cm³.

### <Production of Secondary Battery>

Each of the electrodes (negative electrodes) of Examples and Comparative Examples and the positive electrode were alternately stacked with a polyethylene separator having a thickness of 15 µm interposed therebetween to produce an electrode group.

An aluminum tab was ultrasonically welded to each of the positive electrode current collector and the negative electrode current collector included in the obtained electrode group. Thereafter, the electrode group was housed in a pack made of a laminate film as a container member, and then vacuum-dried at 80°C for 12 hours. Thereafter, in a glove box under an argon atmosphere, a liquid nonaqueous electrolyte was injected into the pack made of a laminate film, and completely sealed by heat sealing to produce a secondary battery. As the liquid nonaqueous electrolyte, an electrolyte obtained by dissolving LiPF₆ at a concentration of 1 M in a solvent obtained by mixing PC and MEC at a volume ratio of 1 : 2 was used.

### (Evaluation)

Using the secondary batteries produced using the electrodes of Examples and Comparative Examples, a 500 cycle capacity retention ratio was tested as follows. First, charge and discharge (charge-and-discharge) were performed under conditions of 25°C and 3 C. This is defined as one cycle. A discharge capacity at the first cycle was measured. This charge-and-discharge was repeated 500 cycles, and a discharge capacity at the 500th cycle was measured. The discharge capacity at the 500th cycle with respect to the discharge capacity at the first cycle in terms of a percentage was defined as the 500 cycle capacity retention ratio (%). The 500 cycle capacity retention ratio (%) is an index of charge-and-discharge cycle performance. The 500 cycle capacity retention ratio (%) is presented in Table 3.

**[Table 1]**

| | Average aspect ratio | I1 | I2 | I1/I2 |
|---|---|---|---|---|
| Example 1 | 1.8 | 73200 | 6670 | 0.09 |
| Example 2 | 2.0 | 35600 | 7550 | 0.21 |
| Example 3 | 1.7 | 110000 | 8800 | 0.08 |
| Example 4 | 2.0 | 40800 | 10200 | 0.25 |
| Example 5 | 1.1 | 28000 | 3300 | 0.12 |
| Example 6 | 2.0 | 38000 | 9000 | 0.24 |
| Example 7 | 2.0 | 41000 | 9400 | 0.23 |
| Example 8 | 1.8 | 75300 | 6550 | 0.09 |
| Example 9 | 1.8 | 73200 | 6670 | 0.09 |
| Example 10 | 1.8 | 73200 | 6670 | 0.09 |
| Example 11 | 1.8 | 31000 | 5950 | 0.19 |
| Example 12 | 1.8 | 72500 | 6250 | 0.09 |
| Example 13 | 1.8 | 35000 | 8500 | 0.24 |
| Comparative Example 1 | 2.3 | 29000 | 7400 | 0.26 |
| Comparative Example 2 | 1.9 | 82000 | 6000 | 0.07 |
| Comparative Example 3 | 2.0 | 41500 | 11400 | 0.27 |

**[Table 2]**

| | Average particle size (µm) | Porosity (%) | Thickness of current collector (µm) |
|---|---|---|---|
| Example 1 | 1.5 | 35 | 15 |
| Example 2 | 2.9 | 39 | 15 |
| Example 3 | 1.5 | 35 | 15 |
| Example 4 | 2.9 | 28 | 15 |
| Example 5 | 0.1 | 30 | 15 |
| Example 6 | 3.0 | 31 | 15 |
| Example 7 | 2.9 | 20 | 15 |
| Example 8 | 1.5 | 40 | 15 |
| Example 9 | 1.5 | 35 | 7 |
| Example 10 | 1.5 | 35 | 20 |
| Example 11 | 1.5 | 19 | 15 |
| Example 12 | 1.5 | 36 | 15 |
| Example 13 | 1.5 | 18 | 15 |
| Comparative Example 1 | 3.0 | 37 | 15 |
| Comparative Example 2 | 1.5 | 23 | 15 |
| Comparative Example 3 | 3.0 | 30 | 15 |

**[Table 3]**

| | Content of electro-conductive agent (% by mass) | Content of granular carbon material (% by mass) | Content of fibrous carbon material (% by mass) | 500 Cycle capacity retention ratio (%) |
|---|---|---|---|---|
| Example 1 | 0.58 | 0.48 | 0.10 | 97 |
| Example 2 | 0.82 | 0.77 | 0.05 | 93 |
| Example 3 | 0.82 | 0.77 | 0.05 | 95 |
| Example 4 | 0.53 | 0.48 | 0.05 | 92 |
| Example 5 | 0.53 | 0.48 | 0.05 | 91 |
| Example 6 | 0.53 | 0.48 | 0.05 | 96 |
| Example 7 | 0.53 | 0.48 | 0.05 | 92 |
| Example 8 | 0.53 | 0.48 | 0.05 | 97 |
| Example 9 | 0.58 | 0.48 | 0.10 | 97 |
| Example 10 | 0.58 | 0.48 | 0.10 | 97 |
| Example 11 | 1.00 | 0.77 | 0.24 | 96 |
| Example 12 | 0.43 | 0.39 | 0.05 | 93 |
| Example 13 | 1.20 | 1.15 | 0.05 | 95 |
| Comparative Example 1 | 0.53 | 0.48 | 0.05 | 88 |
| Comparative Example 2 | 0.53 | 0.48 | 0.05 | 89 |
| Comparative Example 3 | 0.53 | 0.48 | 0.05 | 89 |

In all of the electrodes of Examples 1 to 13, I1/I2 is 0.08 or more and 0.25 or less, and an average aspect ratio of the particles is 2 or less in a cross section of the active material-containing layer along a thickness direction thereof. In all of these Examples, the 500 cycle capacity retention ratios were higher than those in Comparative Examples 1 to 3. That is, charge-and-discharge cycle performance was excellent.

The electrode of Comparative Example 1 in which the particles containing the niobium titanium-containing oxide had a high average aspect ratio of 2.3 had low charge-and-discharge cycle performance. In Comparative Example 1, it is considered that the 020 plane was oriented along the thickness direction of the current collector because the average aspect ratio of the particles containing the niobium titanium-containing oxide was high even when roll pressing was performed such that the electrode density was 2.5 g/cm³. As a result, in the electrode according to Comparative Example 1, a volume change of the niobium titanium-containing oxide is likely to occur along the electrode thickness direction with the charge-and-discharge cycle as compared with other Examples. Therefore, the electrode thickness tends to increase. As a result, a contact property between the niobium titanium-containing oxide and the electro-conductive agent is likely to decrease with the cycle, and as a result, it is considered that the charge-and-discharge cycle performance is low.

In addition, the electrodes of Comparative Examples 2 and 3 in which the value of I1/I2 was out of the range of 0.08 or more and 0.25 or less had low charge-and-discharge cycle performance.

Since the 500 cycle capacity retention ratio of Example 2 having a higher average aspect ratio than that of Example 1 was high, it has become clear that the charge-and-discharge cycle performance can be improved if the average aspect ratio is 2 or less.

From the results of Examples 1, 3, and 4, it has become clear that even in a case where I1/I2 is variously changed, the charge-and-discharge cycle performance can be improved if I1/I2 is within a range of 0.08 or more and 0.25 or less.

In Example 5, the average particle size of the particles containing the niobium titanium-containing oxide was as small as 0.1 µm. This is considered to be because a material different from that in Example 1 was used as a starting material, and a manufacturing method was different. In Example 6, the firing temperature was high and the firing time was as long as 12 hours. It is considered that a crystal was grown by performing firing at a high temperature for a long time in such a manner. As a result, in Example 6, the average particle size of the particles containing the niobium titanium-containing oxide was as large as 3.0 µm. From such results of Examples 5 and 6, it has become clear that even in a case where the average particle size of the particles containing the niobium titanium-containing oxide is variously changed, the charge-and-discharge cycle performance can be improved.

In Example 7, it is considered that as a result of roll pressing such that the electrode density was as high as 2.7 g/cm³, the porosity of the active material-containing layer decreased. On the other hand, in Example 8, it is considered that as a result of performing roll pressing such that the electrode density was as low as 2.55 g/cm³, the porosity of the active material-containing layer increased. Since in both of Examples 7 and 8, the 500 cycle capacity retention ratio was favorable, it has become clear that even in a case where the porosity of the active material-containing layer is variously changed, the charge-and-discharge cycle performance can be improved.

From the results of Examples 1, 9, and 10, it has become clear that even in a case where the thickness of the current collector is variously changed, the charge-and-discharge cycle performance can be improved.

When Examples 1 and 11 to 13 in which the content of the electro-conductive agent was variously changed were compared with each other, the porosity of the active material-containing layer tended to decrease as the content of the electro-conductive agent was higher. Note that since in each of Examples 1 and 11 to 13, the 500 cycle capacity retention ratio was high, it has become clear that even in a case where the content of the electro-conductive agent is variously changed, the charge-and-discharge cycle can be improved.

According to at least one approach or Examples described above, an electrode is provided. The electrode includes a current collector containing aluminum or an aluminum alloy, and an active material-containing layer held by the current collector. The active material-containing layer contains particles containing a niobium titanium-containing oxide. The electrode satisfies the following expression (1): $0.08 \leq I 1 / I 2 \leq 0.25$

I1 is an intensity of a first peak having the highest intensity within a range where 2θ is 46° or more and 48° or less in a diffraction diagram obtained by X-ray diffraction on a surface not held by the current collector in the active material-containing layer. I2 is an intensity of a second peak having the highest intensity within a range where 2θ is 25° or more and 27° or less in the diffraction diagram. In a cross section of the active material-containing layer along a thickness direction thereof, an average aspect ratio of the particles is 2 or less. Therefore, the charge-and-discharge cycle performance can be improved.

Hereinafter, the invention according to the approaches will be additionally described.
<1> An electrode (3) comprising: a current collector (3a) containing aluminum or an aluminum alloy, and an active material-containing layer (3b) held by the current collector (3a), wherein
   the active material-containing layer contains particles (30) containing a niobium titanium-containing oxide, and
   the electrode satisfies the following expression (1), $0.08 \leq I 1 / I 2 \leq 0.25$ expression (1)
   the I1 is an intensity of a first peak having the highest intensity within a range where 2θ is 46° or more and 48° or less in a diffraction diagram obtained by X-ray diffraction on a surface of the active material-containing layer, which is not held by the current collector,
   the I2 is an intensity of a second peak having the highest intensity within a range where 2θ is 25° or more and 27° or less in the diffraction diagram, and
   in a cross section of the active material-containing layer along a thickness direction of the active material-containing layer, an average aspect ratio of the particles is 2 or less.
<2> The electrode according to clause <1>, wherein the particles have an average particle size of 0.1 µm or more and 3 µm or less.
<3> The electrode according to clause <1> or <2>, wherein a porosity of the active material-containing layer measured by a mercury intrusion method is 20% or more and 40% or less.
<4> The electrode according to any one of clauses <1> to <3>, wherein the current collector has a thickness of 7 µm or more and 20 µm or less.
<5> The electrode according to any one of clauses <1> to <4>, wherein
   the active material-containing layer further contains an electro-conductive agent, and
   a ratio of the electro-conductive agent in the active material-containing layer is 1% by mass or less.
<6> The electrode according to according to clause <5>, wherein the electro-conductive agent contains a fibrous carbon material.
<7> A secondary battery (100) comprising:
   a positive electrode (5);
   a negative electrode (3);
   a separator (4); and
   an electrolyte,
   wherein the negative electrode comprising the electrode according to any one of clauses <1> to <6>.
<8> A battery pack (300) comprising the secondary battery (100) according to clause <7>.
<9> The battery pack (300) according to clause <8>, further comprising:
   an external power distribution terminal (350); and
   a protective circuit (346).
<10> The battery pack (300) according to clause <8> or <9>, comprising a plurality of the secondary battery (100), the plurality of secondary batteries being electrically connected in series, in parallel, or in combination of series and parallel.

While certain approaches have been described, these approaches have been presented by way of example only, and are not intended to limit the scope of the inventions. Indeed, the novel approaches described herein may be embodied in a variety of other forms; furthermore, various omissions, substitutions and changes in the form of the approaches described herein may be made without departing from the spirit of the inventions. The accompanying claims and their equivalents are intended to cover such forms or modifications as would fall within the scope and spirit of the inventions.

## Claims

1. An electrode (3) comprising: a current collector (3a) containing aluminum or an aluminum alloy, and an active material-containing layer (3b) held by the current collector (3a), wherein
the active material-containing layer contains particles (30) containing a niobium titanium-containing oxide, and
the electrode satisfies the following expression (1), expression (1): $0.08 \leq I 1 / I 2 \leq 0.25$
the I1 is an intensity of a first peak having the highest intensity within a range where 2θ is 46° or more and 48° or less in a diffraction diagram obtained by X-ray diffraction on a surface of the active material-containing layer, which is not held by the current collector,
the I2 is an intensity of a second peak having the highest intensity within a range where 2θ is 25° or more and 27° or less in the diffraction diagram, and
in a cross section of the active material-containing layer along a thickness direction of the active material-containing layer, an average aspect ratio of the particles is 2 or less.

2. The electrode according to claim 1, wherein the particles have an average particle size of 0.1 µm or more and 3 µm or less.

3. The electrode according to claim 1 or 2, wherein a porosity of the active material-containing layer measured by a mercury intrusion method is 20% or more and 40% or less.

4. The electrode according to any one of claims 1 to 3, wherein the current collector has a thickness of 7 µm or more and 20 µm or less.

5. The electrode according to any one of claims 1 to 4, wherein
the active material-containing layer further contains an electro-conductive agent, and
a ratio of the electro-conductive agent in the active material-containing layer is 1% by mass or less.

6. The electrode according to claim 5, wherein the electro-conductive agent contains a fibrous carbon material.

7. A secondary battery (100) comprising:
a positive electrode (5);
a negative electrode (3);
a separator (4); and
an electrolyte,
wherein the negative electrode comprising the electrode according to any one of claims 1 to 6.

8. A battery pack (300) comprising the secondary battery (100) according to claim 7.

9. The battery pack (300) according to claim 8, further comprising:
an external power distribution terminal (350); and
a protective circuit (346).

10. The battery pack (300) according to claim 8 or 9, comprising a plurality of the secondary battery (100), the plurality of secondary batteries being electrically connected in series, in parallel, or in combination of series and parallel.
